# EUROPEAN PATENT APPLICATION

(11) **EP 4 622 384 A1**
(43) Date of publication of application: **24.09.2025**
(21) Application number: 23916384.3
(22) Date of filing: 20.10.2023
(51) Int. Cl.: H04W 76/10, H04W 88/08, H04W 92/12, H04W 92/20

(54) **ELECTRONIC DEVICE AND METHOD FOR E2 SETUP PROCEDURE**

(30) Priority: 09.01.2023 KR 20230003119
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); KANG, Seungwon, Suwon-si, Gyeonggi-do 16677 (KR); KHO, Youngsung, Suwon-si, Gyeonggi-do 16677 (KR); KIM, Chulmin, Suwon-si, Gyeonggi-do 16677 (KR); LEE, Chungkeun, Suwon-si, Gyeonggi-do 16677 (KR)
(74) Representative: Gulde & Partner
(86) International application number: PCT/KR2023/016423
(87) International publication number: WO 2024/150901

(57) **Abstract**

The present disclosure relates to a 5th generation (5G) or 6th generation (6G) communication system for supporting a higher data transmission rate than a 4th generation (4G) communication system such as long term evolution (LTE). According to embodiments, provided is a method performed by an E2 node. The method may include a step for transmitting an E2 setup request message to a near-real time (near-RT) radio access network (RAN) intelligent controller (RIC). The method may include a step for receiving, from the near-RT RIC, an E2 setup response message for the E2 setup request message. The E2 setup request message may include E2 node component configuration information. When the E2 node is a next generation node base station (gNB)-distributed unit (DU), a request part of the E2 node component configuration information may include a gNB-central unit (CU) configuration update message or a gNB-DU configuration update message.

## Description

### CROSS-REFERENCE TO RELATED APPLICATION(S)

### TECHNICAL FIELD

The disclosure relates to an electronic device and method for an E2 setup procedure.

### BACKGROUND ART

5th generation (5G) communication system or a pre-5G communication system has been developed or improved to meet the growing demand for wireless data traffic since the 4th generation (4G) communication system was commercialized. For this reason, the 5G communication system or the pre-5G communication system is often referred to as a Beyond 4G network communication system or a Post Long Term Evolution (LTE) system.

In order to achieve a high data rate, the 5G communication system is being considered for implementation in an ultra-high frequency (millimeter wave (mmWave)) band (e.g., 60 giga-hertz (GHz) band). Further, in order to mitigate the path loss of radio waves and increase transmission distances of radio waves in the ultra-high frequency band, advanced technologies, such as beamforming, Massive multiple-input multiple-output (MIMO), and Full Dimensional MIMO (FD-MIMO), array antenna, analog beam-forming, and large-scale antenna technologies are being discussed and developed for the 5G communication systems.

Further, in order to improve networks in the 5G communication system, technologies for evolved small cell and advanced small cell, such as cloud radio access network (cloud RAN), ultra-dense network, device to device (D2D) communication, wireless backhaul, moving network, cooperative communication, coordinated multi-points (CoMP), receive interference cancellation or the like are being developed.

In addition, in the 5G communication system, advanced coding modulation (ACM) methods, such as e.g., Hybrid Frequency Shift Keying and Quadrature Amplitude Modulation (FQAM) and Sliding Window Superposition Coding (SWSC) are being developed. Also, advanced access technologies, such as e.g., Filter Bank Multi Carrier (FBMC), Non-Orthogonal Multiple Access (NOMA), and Sparse Code Multiple Access (SCMA), are being developed.

In order to meet the demand for wireless data traffic, the 5G system, new radio or next radio (NR), has been commercialized, providing users with high data rate services through the 5G system like 4G, and it is expected that wireless communication services for various purposes such as services requiring high reliability for specific purposes and Internet of Things, can be provided. Open radio access network (O-RAN) established by operators and equipment providers in a mixed system such as the current 4th generation communication system and 5th generation system, defines E2 application protocol (E2AP) of the E2 interface between E2 node and Near-real time (RT) radio access network (RAN) intelligent controller (RIC).

Considering the development of wireless communication from generation to generation, the technologies have been developed mainly for services targeting humans, such as voice calls, multimedia services, and data services. Following the commercialization of 5th generation (5G) communication systems, it is expected that the number of connected devices will exponentially grow. Increasingly, these will be connected to communication networks. Examples of connected things includes vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6th generation (6G) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time, a network technology for utilizing satellites, High-Altitude Platform Stations (HAPS), and the like in an integrated manner, an improved network structure for supporting mobile base stations and the like and enabling network operation optimization and automation and the like, a dynamic spectrum sharing technology via collision avoidance based on a prediction of spectrum usage, an use of Artificial Intelligence (AI) in wireless communication for improvement of overall network operation by utilizing AI from a designing phase for developing 6G and internalizing end-to-end AI support functions, and a next-generation distributed computing technology for overcoming the limit of UE computing ability through reachable superhigh-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

In the 6G communication system, the function of the RAN is further subdivided and is expected to be separated into service subscribers and service providers. In a service-based network, the subscription service confirmation procedure for service subscription status will be applied to various functions.

The above information is presented as background information only to assist with an understanding of the disclosure. No determination has been made, and no assertion is made, as to whether any of the above might be applicable as prior art with regard to the disclosure.

### DISCLOSURE

### Technical Solution

Aspects of the disclosure are to address at least the above-mentioned problems and/or disadvantages and to provide at least the advantages described below. Accordingly, an aspect of the disclosure is to provide a method performed by an E2 setup procedure.

Additional aspects will be set forth in part in the description which follows and, in part, will be apparent from the description, or may be learned by practice of the presented embodiments.

In accordance with an aspect of the disclosure, a method performed by an E2 node is provided. The method includes transmitting, to a Near-real time (RT) radio access network (RAN) intelligent controller (RIC), an E2 setup request message, and receiving, from the Near-RT RIC, an E2 setup response message for the E2 setup request message, wherein the E2 setup request message includes E2 node component configuration information, wherein a request part of the E2 node component configuration information includes a next generation node base station (gNB)-central unit (CU) configuration update message or a gNB-distributed unit (DU) configuration update message, in case that the E2 node is a gNB-DU, and wherein a response part of the E2 node component configuration information includes a gNB-CU configuration update acknowledge message corresponding to the gNB-CU configuration update message or a gNB-DU configuration update acknowledge message corresponding to the gNB-DU configuration update message, in case that the E2 node is the gNB-DU.

In accordance with an aspect of the disclosure, a method performed by a Near-real time (RT) radio access network (RAN) intelligent controller (RIC) is provided. The method includes receiving, from an E2 node, an E2 setup request message, and transmitting, to the E2 node, an E2 setup response message for the E2 setup request message, wherein the E2 setup request message includes E2 node component configuration information, wherein a request part of the E2 node component configuration information includes a next generation node base station (gNB)-central unit (CU) configuration update message or a gNB-distributed unit (DU) configuration update message, in case that the E2 node is a gNB-DU, and wherein a response part of the E2 node component configuration information includes a gNB-CU configuration update acknowledge message corresponding to the gNB-CU configuration update message or a gNB-DU configuration update acknowledge message corresponding to the gNB-DU configuration update message, in case that the E2 node is the gNB-DU.

In accordance with an aspect of the disclosure, an apparatus of an E2 node is provided. The apparatus includes a memory configured to store instructions, at least one transceiver, and at least one processor coupled to the at least one transceiver. The instructions, when executed by the at least one processor, cause the apparatus to transmit, to a Near-real time (RT) radio access network (RAN) intelligent controller (RIC), an E2 setup request message, and receive, from the Near-RT RIC, an E2 setup response message for the E2 setup request message. The E2 setup request message may comprise E2 node component configuration information. A request part of the E2 node component configuration information may comprise a next generation node base station (gNB)-central unit (CU) configuration update message or a gNB- distributed unit (DU) configuration update message, in case that the E2 node is a gNB-DU. A response part of the E2 node component configuration information may comprise a gNB-CU configuration update acknowledge message corresponding to the gNB-CU configuration update message or a gNB-DU configuration update acknowledge message corresponding to the gNB-DU configuration update message, in case that the E2 node is the gNB-DU.

In accordance with an aspect of the disclosure, an apparatus of a Near-real time (RT) radio access network (RAN) intelligent controller (RIC) is provided. The apparatus includes a memory configured to store instructions, at least one transceiver, and at least one processor coupled to the at least one transceiver, wherein the instructions, when executed by the at least one processor, cause the apparatus to receive, from an E2 node, an E2 setup request message, and transmit, to the E2 node, an E2 setup response message for the E2 setup request message. The E2 setup request message may comprise E2 node component configuration information. A request part of the E2 node component configuration information may comprise a next generation node base station (gNB)-central unit (CU) configuration update message or a gNB-distributed unit (DU) configuration update message, in case that the E2 node is a gNB-DU. A response part of the E2 node component configuration information may comprise a gNB-CU configuration update acknowledge message corresponding to the gNB-CU configuration update message or a gNB-DU configuration update acknowledge message corresponding to the gNB-DU configuration update message, in case that the E2 node is the gNB-DU.

Other aspects, advantages, and salient features of the disclosure will become apparent to those skilled in the art from the following detailed description, which, taken in conjunction with the annexed drawings, discloses various embodiments of the disclosure.

### DESCRIPTION OF THE DRAWINGS

The above and other aspects, features, and advantages of certain embodiments of the disclosure will be more apparent from the following description taken in conjunction with the accompanying drawings, in which:
FIG. 1 illustrates an example of a 4th generation (4G) Long Term Evolution (LTE) core system;
FIG. 2A illustrates an example of a 5th generation (5G) non-standard alone (NSA) system;
FIG. 2B illustrates an example of an architecture for open radio access network (O-RAN);
FIG. 3 illustrates a protocol stack of an E2 application protocol message in a radio access network;
FIG. 4 illustrates an example of a connection between a base station and a radio access network (RAN) intelligence controller (RIC) in a radio access network;
FIG. 5 illustrates a configuration of an apparatus in a radio access network;
FIG. 6 illustrates logical functions related to an E2 message of an RIC and an E2 node in a radio access network;
FIG. 7 illustrates examples of functional separation between an E2 node and an RIC;
FIG. 8 illustrates an example of implementation of an E2 node and an RIC;
FIG. 9 illustrates examples of functional separation between a centralized unit (CU) and an RIC;
FIG. 10 illustrates examples of an E2AP procedure between an E2 node and a Near-RT RIC;
FIG. 11 illustrates an example of signaling between network entities for cell creation; and
FIGS. 12A and 12B illustrate examples of a message structure of an E2 setup request message.

Throughout the drawings, it should be noted that like reference numbers are used to depict the same or similar elements, features, and structures.

### MODE FOR INVENTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In various examples of the disclosure described below, a hardware approach will be described as an example. However, since one or more embodiments of the disclosure include a technology that utilizes both the hardware and the software, they are not intended to exclude the software-based approach.

As used in the following description, the terms referring to a configuration (e.g., setup, setting, arrangement, control), the terms referring to a signal (e.g., packet, message, signal, information, signaling), the terms referring to a resource (e.g., section, symbol, slot, subframe, radio frame, subcarrier, resource element (RE), resource block (RB), bandwidth part (BWP), occasion), the terms for indicating an operating state (e.g., step, operation, procedure), the terms referring to data (e.g., packet, message, user stream, information, bit, symbol, codeword), the terms referring to a channel, the terms referring to network entities (distributed unit (DU), radio unit (RU), central unit (CU), CU-control plane (CP) (CU-CP), open radio access network (O-RAN) DU (O-DU), O-RAN RU (O-RU), O-RAN CU (O-CU), O-RAN CU-user plane (UP) (O-CU-UP), O-RAN CU-CP (O-CU-CP)), the terms referring to components of an apparatus, and so on are illustrated for convenience of description. Therefore, the disclosure is not limited to those terms described below, and other terms having equivalent technical meanings thereto may be used therefor. In addition, as used herein, the terms such as e.g., '... unit', '... module', '... group', '... part' may mean at least one form of structure or a unit that processes a certain function.

Further, throughout the disclosure, an expression such as e.g., 'above (or exceeding)' or 'below' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'above', a condition described as 'less than or equal to' may be replaced with 'below', and a condition described as 'more than or equal to' and 'below' may be replaced with 'above' and 'less than or equal to', respectively. Further, unless explicitly dictated otherwise, 'A' to 'B' is intended to mean at least one of the elements from A to (inclusive of A) and B (inclusive of B). Hereinafter, unless explicitly dictated otherwise, 'C' and/or 'D' is intended to mean at least one of 'C' or 'D', that is, {'C', 'D', 'C' and 'D'}.

Further, the disclosure describes one or more embodiments using the terms used in some communication standard specifications (e.g., 3^{rd} Generation Partnership Project (3GPP), extensible radio access network (xRAN), open-radio access network (O-RAN), but they are merely of an example for description. One or more embodiments of the disclosure may be easily modified and applied even in other communication systems.

Along with the commercialization of 4G communication system and 5G communication systems (e.g., New Radio (NR)), differentiated service supports have been ever required for users in a virtualized network. Thus, the 3GPP has been originated from a joint research project between several mobile communication-related organizations, aiming to create a 3G mobile communication system specification, globally applicable, within the scope of IMT-2000 project of the International Telecommunication Union (ITU). The 3GPP was established in December 1998, and the 3GPP specification is based on the advanced GSM standard, including all of radio, core network, and service architecture in the standardization range. Accordingly, the O-RAN has newly defined radio unit (RU), digital unit (DU), central unit (CU) - control plane (CP), and CU-user plane (UP), which are nodes constituting a 3GPP network entity (NE) and a base station, as O-RAN (O)-RU, O-DU, O-CU-CP, and O-CU-UP, respectively, and additionally standardized the near-real-time (near-RT) radio access network intelligent controller (RIC). According to one or more embodiments, the disclosure is directed to an operator specific service model in an E2 interface in which an RIC requests a service from O-DU, O-CU-CP or O-CU-UP. Here, O-RU, O-DU, O-CU-CP, and O-CU-UP may be understood as objects constituting a RAN capable of operating according to an O-RAN standard, and may be referred to as 'E2 nodes.' An interface with the objects constituting the RAN capable of operating according to the O-RAN standard between the RIC and the E2 nodes uses an E2AP, which is an application protocol.

The RIC is a logical node that may collect information on a cell site where a terminal, an O-DU, an O-CU-CP, or an O-CU-UP transmits and receives. The RIC may be implemented in the form of servers concentrated in one physical location. Connections may be established between O-DU and RIC, between O-CU-CP and RIC, and between O-CU-UP and RIC through Ethernet. To this end, the interface standard specification for communication between O-DU and RIC, between O-CU-CP and RIC, and between O-CU-UP and RIC are required, and the definitions of the message specification for E2-DU, E2-CU-CP, E2-CU-UP or the like and the procedures between O-DU, O-CU-CP, O-CU-UP and RIC are required as well. In particular, it is necessary to define the functions of E2-DU, E2-CU-CP, and E2-CU-UP messages for supporting services for a wide range of cell coverage, as the differentiated service support is required for users in a virtualized network and the call processing messages/functions generated in the O-RAN are concentrated on the RIC. In an embodiment, the RIC may be referred as a network controller or a RAN controller, etc.

The RIC may perform communications with O-DU, O-CU-CP, and O-CU-UP using the E2 interface, and generate and transmit a subscription message to set event occurrence conditions. More specifically, the RIC may generate an E2 subscription request message and transfer the same to an E2 node (e.g., O-CU-CP, O-CU-UP, O-DU) to set a call processing EVENT. Further, subsequent to setting the call processing EVENT, the E2 node may transmit a subscription request response message transferred to the RIC.

The E2 node may transmit the current status to the RIC through an E2 indication/report. The RIC may use an E2 control message to control O-DU, O-CU-CP, and O-CU-UP. One or more embodiments of the disclosure propose an E2 indication message that transmits a UE unit of measurement information for each period set in a subscription event condition in the O-DU. Furthermore, one or more embodiments of the disclosure propose a message for controlling a resource transmitted from the RIC to the O-DU.

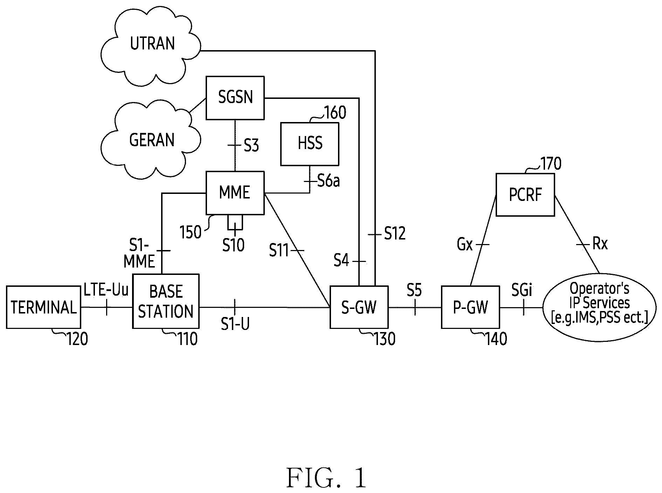

FIG. 1 illustrates an example of a fourth generation (4G) Long Term Evolution (LTE) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides wireless access to the terminal 120. For example, the base station 110 is an apparatus that collects state information of the terminal 120, such as a buffer state, an available transmission power, or a channel state, to perform scheduling. The base station 110 has a coverage defined as a certain geographic area based on a distance capable of transmitting a signal. The base station 110 is connected to the MME 150 through an S1-MME interface. In addition, the base station 110 may be also referred to as 'access point (AP)', 'eNodeB (eNB)', 'wireless point', 'transmission/reception point (TRP)', or other terms having an equivalent technical meaning thereto.

The terminal 120, which is a device used by a user, performs communications with the base station 110 through a radio channel. In some cases, the terminal 120 may be operated without any user involvement. For example, the terminal 120 may be a device to perform machine-type communication (MTC), and may not be carried by a user. Further, the terminal 120 may be referred to as 'user equipment (UE)', 'mobile station', 'subscriber station', 'customer-premises equipment (CPE)', 'remote terminal', 'wireless terminal', 'user device', or any other term having an equivalent meaning thereto.

The S-GW 130 provides a data bearer, and generates or controls the data bearer under the control of the MME 150. For example, the S-GW 130 may process packets arriving from the base station 110 or packets to be forwarded to the base station 110. Further, the S-GW 130 may serve as an anchor during handover of the terminal 120 between base stations. The P-GW 140 may serve as a connection point with an external network (e.g., an Internet network). Further, the P-GW 140 may allocate an Internet Protocol (IP) address to the terminal 120 and serves as an anchor for the S-GW 130. Further, the P-GW 140 may apply a quality of service (QoS) policy of the terminal 120 and manage account data.

The MME 150 manages mobility of the terminal 120. Further, the MME 150 may perform authentication, bearer management, and so on for the terminal 120. That is to say, the MME 150 is in charge of mobility management and various control functions for the terminal. The MME 150 may be associated with a serving general packet radio service (GPRS) support node (SGSN).

The HSS 160 stores key information and subscriber profile for authentication of the terminal 120. The key information and the subscriber profile are transmitted from the HSS 160 to the MME 150 when the terminal 120 makes access to a network.

The PCRF 170 defines rules for the policy and the charging. The stored information is transmitted from the PCRF 170 to the P-GW 140, and the P-GW 140 may perform control (e.g., QoS management, charging, etc.) of the terminal 120 based on the information provided from the PCRF 170.

Carrier aggregation (hereinafter, referred to as 'CA') may be capable of combining multiple component carriers and transmitting/receiving signals using such multiple component carriers at the same time, thereby increasing the efficiency of frequency use from the viewpoint of a terminal or a base station. Specifically, according to the CA technology, the terminal and the base station may transmit and receive signals using a broadband, using multiple component carriers in uplink (UL) and downlink (DL), respectively. Each of the component carriers is located in a different frequency band. Hereinafter, the term 'uplink' refers to a communication link the terminal transmits a signal to the base station, and the term 'downlink' refers to a communication link the base station transmits a signal to the terminal. In such a circumstance, the number of uplink component carriers and downlink component carriers may be different from each other.

Dual connectivity or multi-connectivity may increase the efficiency of frequency use from the viewpoint of a terminal or base station, by having one terminal connected to multiple base stations to transmit and receive signals simultaneously using carriers in the multiple base stations located in different frequency bands. The terminal may be connected to a first base station (e.g., a base station providing services using LTE technology or 4G mobile communication technology) and a second base station (e.g., a base station providing services using NR technology or 5G mobile communication technology) at the same, to transmit and receive traffic. In such a case, the frequency resources used by each base station may be located in different bands. As such, a scheme that operates based on a dual connectivity with LTE and NR may be referred to as 5G non-standalone (NSA).

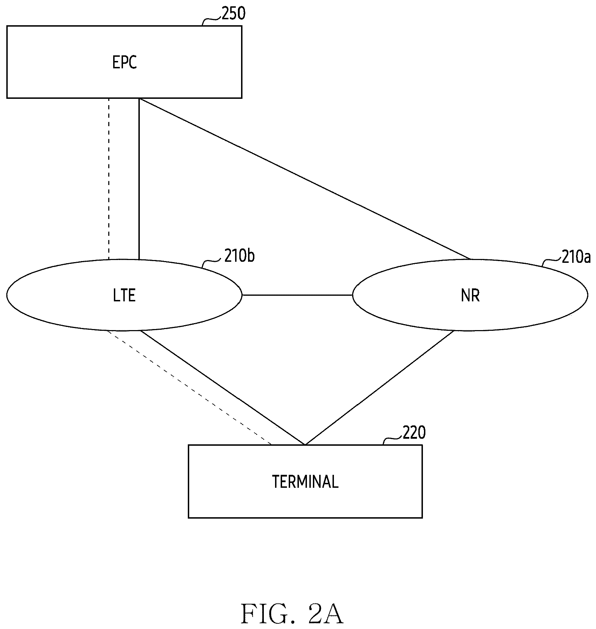

FIG. 2A illustrates an example of a 5G NSA system.

Referring to FIG. 2A, the 5G NSA system includes an NR RAN 210a, an LTE RAN 210b, a terminal 220, and an evaded packet core (EPC) 250. The NR RAN 210a and the LTE RAN 210b are connected to the EPC 250, and the terminal 220 may receive a service from either one or both of the NR RAN 210a and the LTE RAN 210b at the same time. The NR RAN 210a includes at least one NR base station, and the LTE RAN 210b includes at least one LTE base station. Here, the NR base station may be referred to as '5^{th} generation (5G) node,' 'next generation nodeB (gNB),' or other terms having an equivalent technical meaning. Further, the NR base station may have a structure separated by a central unit (CU) and a digital unit (DU), and the CU may also have a structure separated by a control plane (CU-CP) unit and a user plane (CU-UP) unit.

In the structure shown in FIG. 2A, the terminal 220 may perform a radio resource control (RRC) connection through a first base station (e.g., a base station belonging to LTE RAN 210b) and may be served with a function (e.g., connection management, mobility management, etc.) provided in the control plane. Further, the terminal 220 may be provided with an additional radio resource for transmitting and receiving data through a second base station (e.g., a base station belonging to NR RAN 210a). Such dual connectivity technology using the LTE and the NR may be referred to as EN-DC (evolved universal terrestrial radio access (E-UTRA) - NR dual connectivity). Similarly, the dual connectivity technology that the first base station uses the NR technology and the second base station uses the LTE technology may be referred to as NR-DC (NR - E-UTRA dual connectivity). Further, one or more embodiments may be applied to various other forms of multi-connectivity and carrier aggregation technologies. Furthermore, one or more embodiments may be also applied in a case where a first system (using a first communication technology) and a second system (using a second communication technology) are implemented in one device, or in a case where a first base station and a second base station are located in the same geographical location.

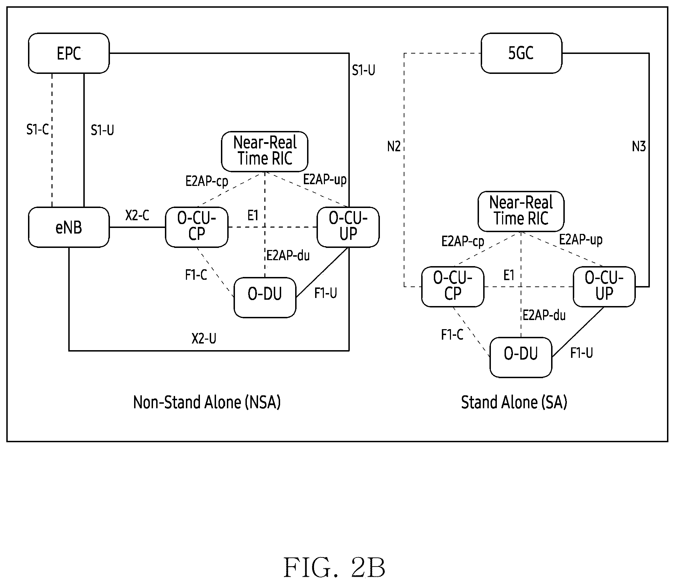

FIG. 2B illustrates an example of an architecture for O-RAN. For the purpose of E2-SM-KPIMON (key performance indicator (KPI) monitoring) of an E2 service model, an O-RAN NSA mode in multi-connectivity operation using E-UTRA and NR radio access technology may be considered, while the E2 node may be assumed to be in O-RAN standalone (SA) mode.

Referring to FIG. 2B, in deployment of the O-RAN NSA mode, the eNB may be connected to the EPC via an S1-C/S1-U interface, and may be connected to the O-CU-CP via an X2 interface. The O-CU-CP for deployment of the O-RAN SA mode may be connected to the 5GC (5G core) via an N2/N3 interface.

Currently, discussions are underway to improve and enhance performance of the initial 5G mobile communication technology in consideration of the services that the 5G mobile communication technology was intended to support and physical layer standardization for technologies such as Vehicle-to-Everything (V2X) to help determine the driving of an autonomous vehicle based on its own location and status information transmitted by the vehicle and increase user convenience, New Radio Unlicensed (NR-U), which aims to operate a system that meets various regulatory requirements in unlicensed bands, NR terminal low power consumption technology (UE Power Saving), Non-Terrestrial Network (NTN), which is direct terminal-satellite communication to secure coverage in areas where communication with the terrestrial network is impossible, and positioning are in progress.

In addition, standardization in the field of air interface architecture/protocol for Technologies such as intelligent factories (Industrial Internet of Things, IIoT) for new service support through linkage and convergence with other industries, Integrated Access and Backhaul (IAB), which provides nodes for network service area expansion by integrating and supporting wireless backhaul links and access links, mobility enhancement including conditional handover and dual active protocol stack (DAPS) handover, and 2-step random access (2-step RACH for NR) that simplifies the random access procedure is also in progress and standardization in the field of system architecture/service like 5G baseline architecture (e.g., Service based Architecture, Service based Interface) for grafting of Network Functions Virtualization (NFV) and Software-Defined Networking (SDN) technologies, based on the location of the device about Mobile Edge Computing (MEC), etc. is also in progress.

If such a 5G mobile communication system is commercialized, the explosively increasing trend of connected devices will be connected to the communication network and accordingly, it is expected that the function and performance enhancement of the 5G mobile communication system and the integrated operations of connected devices will be required. To this end, augmented reality (AR), virtual reality (VR), mixed reality (MR), etc. to efficiently support eXtended Reality (XR) and artificial intelligence (AI) and machine learning (ML), new research on 5G performance improvement and complexity reduction, AI service support, metaverse service support, and drone communication will be conducted. To this end, new studies regarding eXtended Reality (XR) to efficiently support augmented reality (AR), virtual reality (VR), mixed reality (MR), etc. to efficiently support and 5G performance improvement and complexity reduction utilizing artificial intelligence (AI) and machine learning (ML), AI service support, metaverse service support, drone communication, etc. are forthcoming.

In addition, the development of these 5G mobile communication systems could be the basis for development of not only multi-antenna transmission technology like New waveforms to ensure coverage in the terahertz band of 6G mobile communication technology, Full Dimensional MIMO (FD-MIMO), array antenna, large scale antenna, metamaterial-based lenses and antennas to improve coverage of terahertz band signals, high-dimensional spatial multiplexing technology using Orbital Angular Momentum (OAM), Reconfigurable Intelligent Surface (RIS) technology, but also full duplex technology to improve frequency efficiency and system network of 6G mobile communication technology, Artificial Intelligence (AI) -based communication technology that realizes system optimization by utilizing satellite and AI from the design stage and internalizing end-to-end AI support functions, next-generation distributed computing technology that realizes complex services that exceed the limits of terminal computing capabilities by utilizing ultra-high-performance communication and computing resources, etc.

Although illustrated in FIGS. 1, 2A, and 2B as an example in a 4G and/or 5G environment, this description does not limit the scope of the communication environment of the embodiments of the disclosure. Technical principles according to embodiments of the disclosure may also be applied to 6G and post-6G communication technologies and network environments.

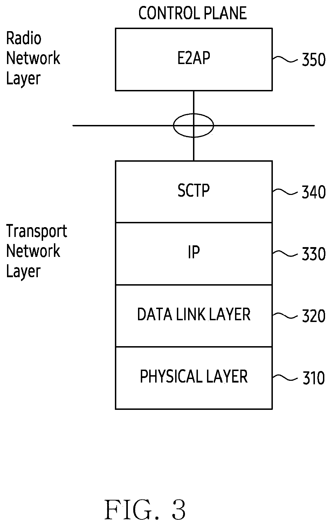

FIG. 3 illustrates an example of a protocol stack of an E2 application protocol message in a radio access network. Referring to FIG. 3, a control plane includes a transport network layer and a radio network layer. The transport network layer includes a physical layer 310, a data link layer 320, an Internet protocol (IP) 330, and a stream control transmission protocol (SCTP) 340.

The radio network layer includes an E2AP 350. The E2AP 350 may be used to deliver a subscription message, an indication message, a control message, a service update message, and a service query message, and may be transmitted from a higher layer of the SCTP 340 and the IP 330.

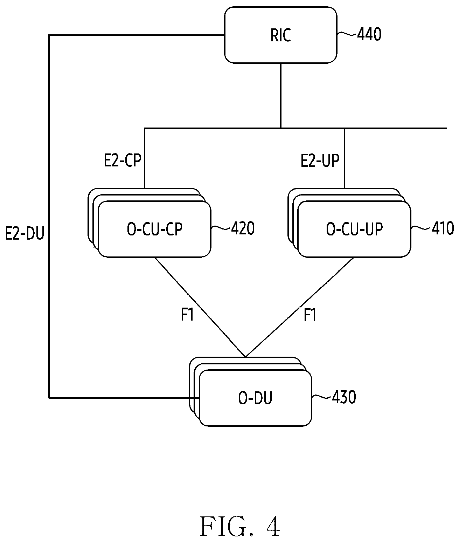

FIG. 4 illustrates an example of connection between a base station and a RIC in a radio access network.

Referring to FIG. 4, the RIC 440 is connected to the O-CU-UP 410, the O-CU-CP 420, and the O-DU 430. The RIC 440 may customize the RAN functionality for new services or regional resource optimization. The RIC 440 may provide network intelligence (e.g., policy enforcement, handover optimization), resource assurance (e.g., radio-link management, advanced self-organized network (SON), resource control (e.g., load balancing, slicing policy) or the like. The RIC 440 may communicate with the O-CU-CP 420, the O-CU-UP 410, and the O-DU 430. The RIC 440 may be connected to each node through E2-CP, E2-UP, and E2-DU interfaces. Further, the interface between the O-CU-CP and the DU, and/or between the O-CU-UP and the DU may be referred to as an F1 interface. In the following description, DU and O-DU, CU-CP and O-CU-CP, and CU-UP and O-CU-UP may be respectively used interchangeably with each other.

Although FIG. 4 illustrates one RIC 440, a plurality of RICs may exist according to one or more embodiments. The plurality of RICs may be implemented with a plurality of hardware located in the same physical location or may be implemented by means of virtualization using one hardware.

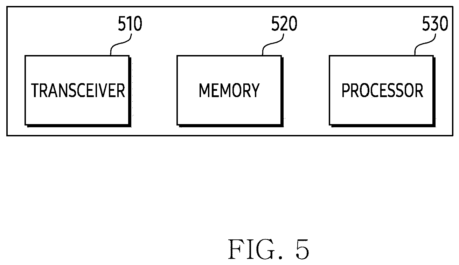

FIG. 5 illustrates an example of a configuration of an apparatus. The configuration illustrated in FIG. 5 may be understood as a configuration of a device having at least one function of near-RT RIC, non-RT RIC, O-CU-CP, O-CU-UP, and O-DU of FIG. 4. As used hereunder, the terms such as '~ module', '~ unit', '~ group', '~ part', or the like may refer to a unit that process at least one function or operation, which may be implemented as hardware, software, or a combination of hardware and software.

Referring to FIG. 5, a core network device includes a communication unit 510, a storage unit 520, and a controller 530.

The communication unit 510 provides an interface for performing communication with other devices in a network. In other words, the communication unit 510 converts a bit string transmitted from the core network device to another device into a physical signal and converts the physical signal received from the other device into a bit string. That is, the communication unit 510 may transmit and receive signals. Accordingly, the communication unit 510 may be referred to as a modem, a transmit unit, a receive unit, or a transmit/receive unit. In this case, the communication unit 510 enables the core network device to communicate with other devices or systems through a backhaul connection (e.g., wired backhaul or wireless backhaul) or through the network. The communication unit 510 may include one or more transceivers.

The storage unit 520 stores data such as e.g., a basic program, an application program, and setting information for an overall operation of the core network device. The storage 520 may include a volatile memory, a non-volatile memory, or a combination of the volatile memory and the non-volatile memory. Further, the storage unit 520 provides the stored data according to a request of the controller 530.

The controller 530 controls overall operations of the core network device. For example, the controller 530 transmits and receives signals through the communication unit 510. Further, the controller 530 records and reads data in/from the storage unit 520. To this end, the controller 530 may include at least one processor. According to one or more embodiments, the controller 530 may control the apparatus to perform operations according to one or more embodiments described in the disclosure.

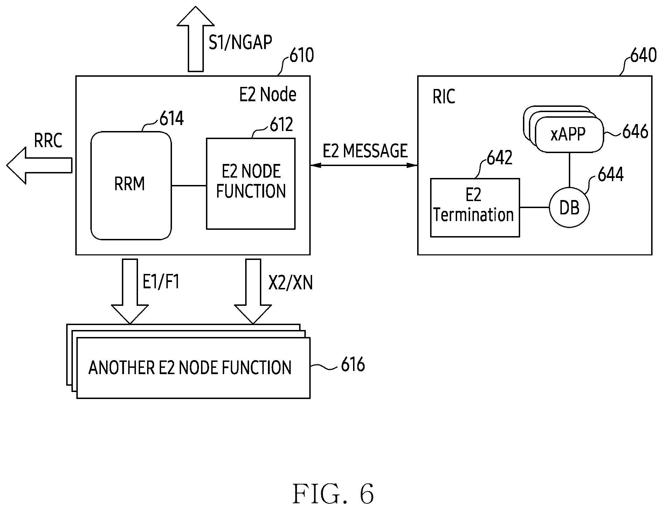

FIG. 6 illustrates a logical function related to an E2 message of an E2 node and an RIC in a radio access network.

Referring to FIG. 6, an RIC 640 and an E2 node 610 may transmit or receive E2 messages to/from each other. For example, the E2 node 610 may be an O-CU-CP, an O-CU-UP, an O-DU, or a base station. The communication interface of the E2 node may be determined depending upon the type of the E2 node 610. For example, the E2 node 610 may communicate with another E2 node 616 through an E1 interface or an F1 interface. Alternatively, for example, the E2 node 610 may communicate with the E2 node 616 via an X2 interface or an XN interface. Alternatively, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 corresponds to a specific xApp (application software (S/W)) 646 installed in the RIC 640. For example, in case of a KPI monitor, KPI monitor collection S/W may be installed in the RIC 640, and the E2 node 610 may include the E2 node function 612 that generates KPI parameters and then delivers an E2 message including the KPI parameters to an E2 termination 642 located in the RIC 640. The E2 node 610 may include a radio resource management (RRM) 614. The E2 node 610 may manage resources provided to a radio network for a terminal. xApp 646 is an application designed to run on the Near-RT RIC. The application may consist of one or more microservices and at the point of on-boarding will identify which data it consumes and which data it provides. The application is independent of the Near-RT RIC and may be provided by any third party. The E2 interface enables a direct association between the xApp 646 and the RAN functionality.

The E2 termination 642 (located in the RIC 640) is a termination of the RIC 640 for the E2 message, and performs a function of interpreting the E2 message delivered (or transmitted) by the E2 node 610, and then, delivering the E2 message to the xApp 646. A database 644 (located in the RIC 640) may be used for the E2 termination 642 and the xApp 646. The E2 node 610 (shown in FIG. 6) is a terminal of at least one interface, and may be understood as a termination of messages transmitted to a terminal, a neighboring base station, and a core network.

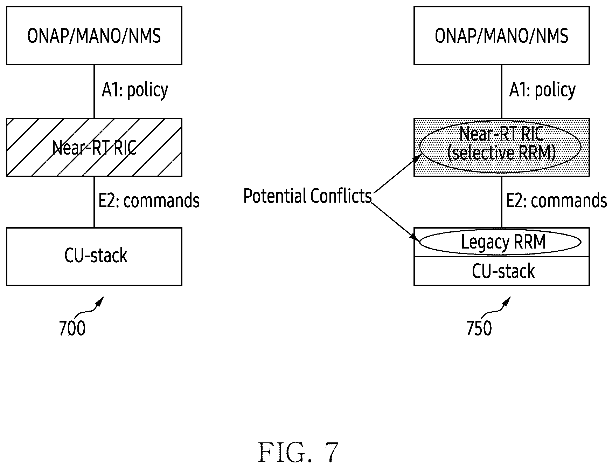

FIG. 7 illustrates examples of functional separations between an E2 node and an RIC. The O-RAN specification provides functional separations between the E2 node and the RIC. For example, the E2 node may be a CU, and the RIC may be a near-RT RIC. The RIC may be connected to open network automation platform (ONAP) / management and orchestration (MANO) / network management system (NMS) through an A1 interface. The RIC may be connected to the E2 node through an E2 interface. The E2 interface may deliver commands. Functional separation options may include functional separation 700 that manages the entire radio resource management (RRM) in the near-RT RIC, and functional separation 750 that optionally manages the RRM in the near-RT RIC.

In related art, the near-RT RIC may support E2 with an open logical interface aimed at multiple vendor environments, regardless of the implementation of specific RRC-RRM algorithms or operations located in near-RT RIC. In one embodiment, E2 Service Model Radio Interface Control (E2SM-RIC) may be paired with E2SM-NI capable of performing injection/modification/configuration of a Per UE RRC message for each I/F and network entity. In other words, the near-RT RIC can be gradually improved from the function separation 750 toward the function separation 700. E2 interface may evolve into an open logical interface that may be independent of the implementation of a certain RRC-RRM algorithm or operation in the near-RT RIC and may aim at multi-vendor environments.

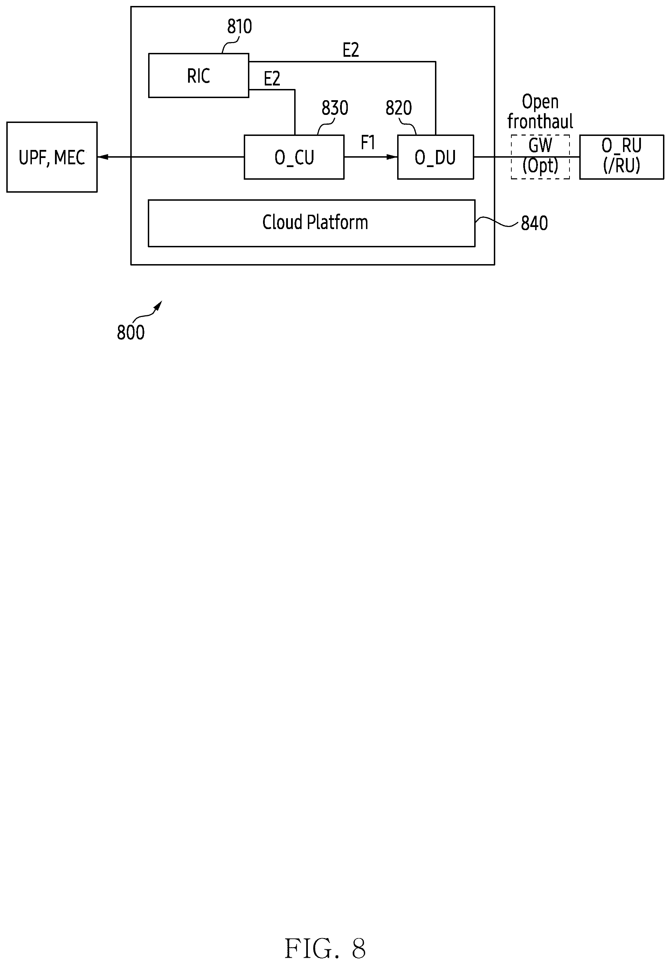

FIG. 8 illustrates an example of implementation of an E2 node and an RIC 810. In an example 800, the E2 node (e.g., O-DU 820, O-CU 830) and the RIC 810 may be virtualized on a cloud platform 840 (e.g., open chassis and blade-specification edge clouds) and configured in a device (e.g., a server). Such a scenario can support deployment in dense urban areas with abundant fronthaul capacity enabling baseband unit (BBU) functions pooled at a central location, with low latency enough to meet the O-DU latency requirements. In one embodiment, it may not be necessary to attempt to centralize the RIC close to RT beyond the limit capable of centralizing the O-DU functionality. According to an embodiment, E2SM-RIC may be optimized for an O-RAN deployment scenario in which near-RT RIC, O-CU, and O-DU are implemented in an O-Cloud

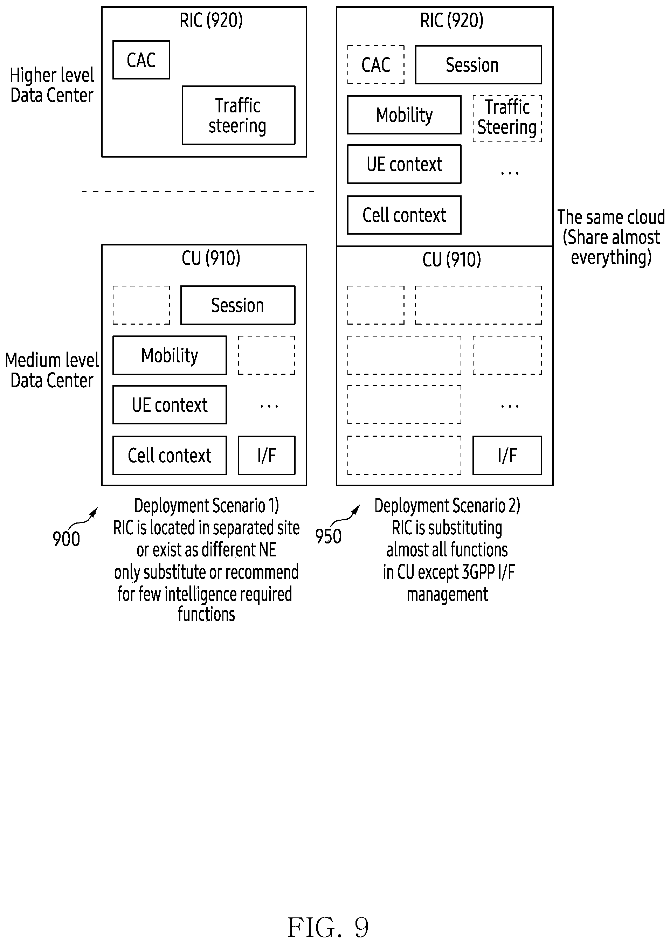

FIG. 9 illustrates examples of functional separations between a centralized unit (CU) 910 and an RIC 920.

Referring to FIG. 9, the functional separations may be performed according to a deployment scenario #1 (example 900) or a functional deployment scenario #2 (example 950).

**Deployment Scenario #1 (900):** RIC is located at a separated site or exists only as a different Network Element (NE), and substitutes or recommends a few of intelligence required features (e.g., traffic steering, cell admission control (CAC)).

**Deployment Scenario #2 (950):** RIC can substitute almost all functions of CU except 3GPP I/F management (e.g., mobility function, session function, UE context function, cell context function). In deployment scenario #2 950, the RIC may be implemented as a CU-like device (e.g., a server device). For example, within the same cloud, the RIC may share all functions with the CU.

Although FIG. 9 illustrates two scenarios, other scenarios may be applied. For example, in the deployment scenario #1 (900), the mobility function may be performed by the RIC 920 rather than the CU 910. Further, for example, in the deployment scenario #1 (900), the UE context function may be performed by the RIC 920 and not the CU 910. Further, for example, in the deployment scenario #1 (900), the session setting function may be performed by the RIC 920, and not the CU 910.

Hereinafter, the disclosure relates to an E2 setup procedure for delivering an update message or update acknowledge message of an E2 node to Near-RT RIC in a wireless communication system. Specifically, the disclosure relates to a procedure, message, and method for delivering related information to the Near-RT RIC before the E2 node configuration update procedure, by including an update message of the E2 node (e.g., gNB-CU, gNB-DU) or an update acknowledge message of the E2 node in the E2 setup request message.

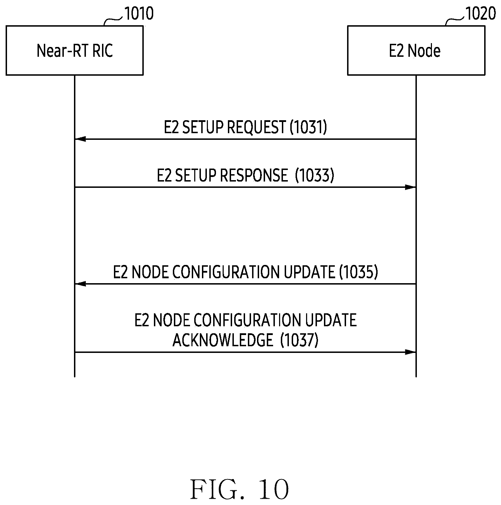

FIG. 10 illustrates examples of an E2AP procedure between an E2 node and a Near-RT RIC.

Referring to FIG. 10, the E2 NODE SETUP procedure and the E2 NODE CONFIGURATION UPDATE procedure are described.

Referring to FIG. 10, a Near-RT RIC 1010 may perform communication with a E2 node 1020 through the E2 interface. The Near-RT RIC 1010 exemplifies the RIC (e.g., a RIC 640) or the Near-RT RIC described in FIGS. 1, 2A, 2B, and 3 to 9. The E2 node 1020 exemplifies the E2 node described in FIGS. 1, 2A, 2B, and 3 to 9, for example, O-DU, O-CU-CP, or O-CU-UP.

In operation 1031, the E2 node 1020 may transmit an E2 SETUP REQUEST message to the Near-RT RIC 1010. The Near-RT RIC 1010 may receive the E2 setup request message from the E2 node 1020. The purpose of the E2 setup procedure is to establish a signal connection between the E2 node 1020 and the Near-RT RIC 1010. The E2 setup procedure may erase both nodes existing application level configuration data and may replace the configuration with the received data. The E2 setup procedure may also reset the E2 interface. The E2 setup procedure may be initiated by the E2 node. The E2 node 1020 may perform basic interface setup and may transmit E2 node specific configuration information to the Near-RT RIC 1010.

In operation 1033, the Near-RT RIC 1010 may transmit an E2 SETUP RESPONSE message to the E2 node 1020. The E2 node 1020 may receive the E2 setup response message from the Near-RT RIC 1010. Meanwhile, in FIG. 10, the E2 setup procedure including transmission of the E2 setup request message and transmission of the E2 setup response message has been described, but embodiments of the disclosure are not limited thereto. The E2 setup procedure may include transmission of the E2 setup request message and transmission of an E2 SETUP FAILURE message. For example, the Near-RT RIC 1010 may transmit the E2 setup failure message to the E2 node 1020 in case that it cannot accept or does not accept the setup of the E2 node 1020.

For example, the E2 setup request message may be configured as follows.

**Table 1**

| IE/Group Name | Presence | Range | IE type and reference | Semantics description | Criticality | Assigned Criticality |
|---|---|---|---|---|---|---|
| Message Type | M | | 9.2.3 | | YES | reject |
| Transaction ID | M | | 9.2.33 | . | YES | reject |
| Global E2 Node ID | M | | 9.2.6 | | YES | reject |
| RAN Functions Added List | | 1 | | List of RAN functions in E2 node | YES | reject |
| >RAN Function item | | 1.. <maxofRA NfunctionID > | | | | |
| >>RAN Function ID | M | | 9.2.8 | Id of the declared Function | - | |
| >>RAN Function Definition | M | | 9.2.23 | Definition of Function | - | |
| >>RAN Function Revision | M | | 9.2.24 | Revision counter | - | |
| >>RAN Function OID | M | | 9.2.31 | Object identifier of correspondi ng E2SM | - | |
| E2 Node Component Configuration Addition List | | 1 | | List of E2 Node component configurati on information | YES | reject |
| >E2 Node Component Configuration Addition Item | | 1.. <maxofE2n odeCompon ents> | | | EACH | reject |
| >>E2 Node Component Interface Type | M | | 9.2.26 | E2 Node component interface type | - | |
| >>E2 Node Component ID | O | | 9.2.32 | E2 Node Component Identifier | - | |
| >>E2 Node Component Configuration | M | | 9.2.27 | Contents depends on component interface type | - | |

The 'Global E2 Node ID' information element (IE) indicates information for globally identifying the E2 node 1020. For example, the 'Global E2 Node ID' IE may include the Global gNB ID defined in 3GPP TS 38.423 and the gNB-DU ID defined in 3GPP TS 38.473, in case that the E2 node 1020 is a gNB-DU. For example, the 'Global E2 Node ID' IE may include the Global gNB ID defined in 3GPP TS 38.423 and the gNB-UP ID defined in 3GPP TS 38.463, in case that the E2 node 1020 is a gNB-CU-UP.

The 'RAN Functions Added List' IE may include a list of RAN functions to be added. The list may include a RAN Function ID, a RAN Function Definition, a RAN Function Revision, and a RAN Function object identifier (OID).

The 'E2 Node Component Configuration Addition List' IE may include a list of E2 node component configurations to be added. The list may include one or more E2 node component configuration items to be added. The E2 node component configuration may be used to deliver E2 node component configuration update information for a specific E2 node component. In all cases, information is defined by the appropriate 3GPP standard, is a data structure delivered to OCTET STRING, and is exemplified as follows. The 'Component Addition list' of Table 3 may be referred to.

**Table 2**

| IE/Group Name | Presence | Range | IE type and reference | Semantics description |
|---|---|---|---|---|
| SEQUENCE | M | | | |
| >E2 Node Component Request Part | M | | OCTET STRING | Contents depend on component type and used to carry new or updated component configuration. See the table below. |
| >E2 Node Component Response Part | M | | OCTET STRING | Contents depend on component type and used to carry new or updated component configuration. See the table below. |

**Table 3**

| | Component Addition list | | Component Update list | |
|---|---|---|---|---|
| E2 Node component message content | Request part | Response part | Request part | Response part |
| gNB case | | | | |
| >NG | NG SETUP REQUEST, 3GPP 38.413 [19] clause 9.2.6.1 | NG SETUP RESPONSE , 3GPP 38.413 [19] clause 9.2.6.2 | RAN CONFIGURATION UPDATE, 3GPP 38.413 [19] clause 9.2.6.4 | RAN CONFIGURATION UPDATE ACKNOWLEDGE, 3GPP 38.413 [19] clause 9.2.6.5 |
| (AMF Name) | | | | |
| | | | Or | Or |
| | | | AMF CONFIGURATION UPDATE, 3GPP 38.413 [19] clause 9.2.6.7 | AMF CONFIGURATION UPDATE ACKNOWLEDGE, 3GPP 38.413 [19] clause 9.2.6.8 |
| >Xn | XN SETUP REQUEST, 3GPP 38.423 [20] clause 9.1.3.1 | XN SETUP RESPONSE , 3GPP 38.423 [20] clause 9.1.3.2 | NG-RAN NODE CONFIGURATION UPDATE, 3GPP 38.423 [20] clause 9.1.3.4 | NG-RAN NODE CONFIGURATION UPDATE ACKNOWLEDGE, 3GPP 38.423 [20] clause 9.1.3.5 |
| (Neighbour Global NG-RAN Node ID) | | | | |
| >E1 | GNB-CU-UP E1 SETUP REQUEST, 3GPP 38.463 [21] clause 9.2.1.4 | GNB-CU-UP E1 SETUP RESPONSE , 3GPP 38.463 [21] clause 9.2.1.5 | GNB-CU-UP CONFIGRATION UPDATE, 3GPP 38.463 [21] clause 9.2.1.10 | GNB-CU-UP CONFIGRATION UPDATE ACKNOWLEDGE, 3GPP 38.463 [21] clause 9.2.1.11 |
| (gNB-CU-UP ID) | | | | |
| | Or | | Or | Or |
| | GNB-CU-CP E1 SETUP REQUEST, 3GPP 38.463 [21] clause 9.2.1.7 | | GNB-CU-CP CONFIGURATION UPDATE, 3GPP 38.463 [21] clause 9.2.1.13 | GNB-CU-CP CONFIGURATION UPDATE ACKNOWLEDGE, 3GPP 38.463 [21] clause 9.2.1.14 |
| | | Or | | |
| | | GNB-CU-CP E1 SETUP RESPONSE , 3GPP 38.463 [21] clause 9.2.1.8 | | |
| >F1 | F1 SETUP REQUEST, 3GPP 38.473 [22] clause 9.2.1.4 | F1 SETUP RESPONSE , 3GPP 38.473 [22] clause 9.2.1.5 | GNB-DU CONFIGRATION UPDATE, 3GPP 38.473 [22] clause 9.2.1.7 | GNB-DU CONFIGRATION UPDATE ACKNOWLEDGE, 3GPP 38.473 [22] clause 9.2.1.8 |
| (gNB-DU ID) | | | | |
| | | | Or | Or |
| | | | GNB-CU CONFIGURATION UPDATE, 3GPP 38.473 [22] clause 9.2.1.10 | GNB-CU CONFIGURATION UPDATE ACKNOWLEDGE, 3GPP 38.473 [22] clause 9.2.1.11 |
| >X2 | EN-DC X2 SETUP REQUEST, 3GPP 36.423 [25] clause 9.1.2.31 | EN-DC X2 SETUP RESPONSE , 3GPP 36.423 [25] clause 9.1.2.32 | EN-DC CONFIGURATION UPDATE, 3GPP 36.423 [25] clause 9.1.2.34 | EN-DC CONFIGURATION UPDATE ACKNOWLEDGE, 3GPP 36.423 [25] clause 9.1.2.35 |
| (Neighbour Global eNB ID) | | | | |
| eNB case | | | | |
| >NG | NG SETUP REQUEST, 3GPP 38.413 [19] clause 9.2.6.1 | NG SETUP RESPONSE , 3GPP 38.413 [19] clause 9.2.6.2 | RAN CONFIGURATION UPDATE, 3GPP 38.413 [19] clause 9.2.6.4 | RAN CONFIGURATION UPDATE ACKNOWLEDGE, 3GPP 38.413 [19] clause 9.2.6.5 |
| (AMF Name) | | | | |
| | | | Or | Or |
| | | | AMF CONFIGURATION UPDATE, 3GPP 38.413 [19] clause 9.2.6.7 | AMF CONFIGURATION UPDATE ACKNOWLEDGE, 3GPP 38.413 [19] clause 9.2.6.8 |
| >Xn | XN SETUP REQUEST, 3GPP 38.423 [20] clause 9.1.3.1 | XN SETUP RESPONSE , 3GPP 38.423 [20] clause 9.1.3.2 | NG-RAN NODE CONFIGURATION UPDATE, 3GPP 38.423 [20] clause 9.1.3.4 | NG-RAN NODE CONFIGURATION UPDATE ACKNOWLEDGE, 3GPP 38.423 [20] clause 9.1.3.5 |
| (Neighbour Global NG-RAN Node ID) | | | | |
| >W1 (ng-eNB-DU ID) | W1 SETUP REQUEST, 3GPP 37.473 [23] clause 9.2.1.4 | W1 SETUP RESPONSE, 3GPP 37.473 [23] clause 9.2.1.5 | NG-ENB-DU CONFIGURATION UPDATE, 3GPP 37.473 [23] clause 9.2.1.7 | NG-ENB-DU CONFIGURATION UPDATE ACKNOWLEDGE, 3GPP 37.473 [23] clause 9.2.1.8 |
| | | | Or | Or |
| | | | NG-ENB-CU CONFIGURATION UPDATE, 3GPP 37.473 [23] clause 9.2.1.10 | NG-ENB-CU CONFIGURATION UPDATE ACKNOWLEDGE, 3GPP 37.473 [23] clause 9.2.1.11 |
| >S1 | S1 SETUP REQUEST, 3GPP 36.413 [24] clause 9.1.8.4 | S1 SETUP RESPONSE , 3GPP 36.413 [24] clause 9.1.8.5 | ENB CONFIGURATION UPDATE, 3GPP 36.413 [24] clause 9.1.8.7 | ENB CONFIGRATION UPDATE ACKNOWLEDGE, 3GPP 36.413 [24] clause 9.1.8.8 |
| (MME Name) | | | | |
| | | | Or | Or |
| | | | MME CONFIGURATION UPDATE, 3GPP 36.413 [24] clause 9.1.8.10 | MME CONFIGURATION UPDATE ACKNOWLEDGE, 3GPP 36.413 [24] clause 9.1.8.11 |
| >X2 (when neighbour is eNB) | X2 SETUP REQUEST, 3GPP 36.423 [25] clause 9.1.2.3 | X2 SETUP RESPONSE , 3GPP 36.423 [25] clause 9.1.2.4 | ENB CONFIGURATION UPDATE, 3GPP 36.423 [25] clause 9.1.2.8 | ENB CONFIGRATION UPDATE ACKNOWLEDGE, 3GPP 36.423 [25] clause 9.1.2.9 |
| (Neighbour Global eNB ID) | | | | |
| >X2 (when neighbour is en-gNB) | EN-DC X2 SETUP REQUEST, 3GPP 36.423 [25] clause 9.1.2.31 | EN-DC X2 SETUP RESPONSE , 3GPP 36.423 [25] clause 9.1.2.32 | EN-DC CONFIGURATION UPDATE, 3GPP 36.423 [25] clause 9.1.2.34 | EN-DC CONFIGURATION UPDATE ACKNOWLEDGE, 3GPP 36.423 [25] clause 9.1.2.35 |
| (Neighbour Global eNB ID) | | | | |

For example, the E2 setup response message may be configured as follows.

**Table 4**

| IE/Group Name | Presence | Range | IE type and reference | Semantics description | Criticality | Assigned Criticality |
|---|---|---|---|---|---|---|
| Message Type | M | | 9.2.3 | | YES | reject |
| Transaction ID | M | | 9.2.33 | . | YES | reject |
| Global RIC ID | M | | 9.2.4 | | YES | reject |
| RAN Functions Accepted List | | 0..1 | | Complete list of Functions accepted by Near-RT RIC | | |
| >RAN Functions ID item | | 1.. <maxofRAN functionID> | | | YES | Reject |
| >>RAN Function ID | M | | 9.2.8 | Id of the declared Function | - | |
| >>RAN Function Revision | M | | 9.2.24 | Revision counter | - | |
| RAN Functions Rejected List | | 0..1 | | Complete list of Functions not accepted by Near-RT RIC | | |
| RAN Functions ID Cause Item | | 1.. <maxofRAN functionID> | | | YES | reject |
| >>RAN Function ID | M | | 9.2.8 | Id of the declared Function | - | |
| >>Cause | M | | 9.2.1 | Reason for not accepting function | - | |
| E2 Node Component Configuration Addition Acknowledge List | | 1 | | Complete list of E2 Node Components in the E2 SETUP REQUEST message | YES | reject |
| >E2 Node Component Configuration Addition Acknowledge Item | | 1.. <maxofE2no deComponen ts> | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| >>E2 Node Component Configuration Acknowledge | M | | 9.2.28 | Success or failure with Cause | - | |

The 'RAN Functions Accepted List' IE indicates a list of accepted RAN functions(s). For example, Near-RT RIC 1010 may accept at least one RAN function among the RAN functions(s) added through the E2 setup request message of the E2 node 1020. The 'RAN Functions Rejected List' IE indicates a list of rejected RAN functions(s). For example, the Near-RT RIC 1010 may reject at least one RAN function among the RAN function(s) added through the E2 setup request message of the E2 node 1020.

The 'E2 Node Component Configuration Addition Acknowledge List' IE indicates a list of E2 node component configurations whose addition has been confirmed. For example, the Near-RT RIC 1010 may feedback at least one E2 node component configuration whose addition has been confirmed, among the E2 node component configurations requested to be added through the E2 node configuration update message of the E2 node 1020.

When the E2 setup procedure is completed, the Near-RT RIC 1010 may perform communication with the E2 node 1020 through the E2 interface. After completing the E2 setup procedure, the Near-RT RIC 1010 may perform the E2 node configuration update procedure with the E2 node 1020. The purpose of the E2 node configuration update procedure is to update the application-level E2 node configuration data required for the E2 node and the Near-RT RIC to properly interoperate through the E2 interface and to support E2 node-initiated transport network layer (TNL) connection removal.

In operation 1035, the E2 node 1020 may transmit the E2 NODE CONFIGURATION UPDATE message to the Near-RT RIC 1010. The Near-RT RIC 1010 may receive the E2 node configuration update message from the E2 node 1020.

In operation 1037, the Near-RT RIC 1010 may transmit an E2 NODE CONFIGURATION ACKNOWLEDGE message to the E2 node 1020. The E2 node 1020 may receive the E2 NODE CONFIGURATION ACKNOWLEDGE message from the Near-RT RIC 1010. Meanwhile, in FIG. 10, the E2 node configuration update procedure including transmission of the E2 node configuration update message and transmission of the E2 NODE CONFIGURATION ACKNOWLEDGE message has been described, but embodiments of the disclosure are not limited thereto. The E2 node configuration update procedure may include transmission of the E2 node configuration update message and transmission of an E2 NODE CONFIGURATION UPDATE FAILURE message.

For example, the E2 node configuration update message may be configured as follows.

**Table 5**

| IE/Group Name | | | Presence | Range | IE type and reference | Semantics description | Criticality | Assigned Criticality |
|---|---|---|---|---|---|---|---|---|
| Message Type | | | M | | 9.2.3 | | YES | reject |
| Transaction ID | | | M | | 9.2.33 | | YES | reject |
| Global E2 Node ID | | | O | | 9.2.6 | Required when sent as first message on new TNL association | YES | reject |
| E2 Node Component Configuration Addition List | | | | 0..1 | | | YES | reject |
| | >E2 Node Component Configuration Addition Item | | | 1.. <maxof E2node Compon ents> | | | EACH | reject |
| | | >>E2 Node Component Interface Type | M | | 9.2.26 | E2 Node component interface type | - | |
| | | >>E2 Node Component ID | M | | 9.2.32 | E2 Node Component Identifier | - | |
| | | >>E2 Node Component Configuration | M | | 9.2.27 | Contents depends on component type | - | |
| E2 Node Component Configuration Update List | | | | 0..1 | | | YES | reject |
| | >E2 Node Component Configuration Update Item | | | 1.. <maxof E2node Compon ents> | | | EACH | reject |
| | | >>E2 Node Component Interface Type | M | | 9.2.26 | E2 Node component interface type | - | |
| | | >>E2 Node Component ID | M | | 9.2.32 | E2 Node Component Identifier | - | |
| | | >>E2 Node Component Configuration | M | | 9.2.27 | Contents depends on component type | - | |
| E2 Node Component Configuration Removal List | | | | 0..1 | | | YES | reject |
| | >E2 Node Component Configuration Removal Item | | | 1.. <maxof E2node Compon ents> | | | EACH | reject |
| | | >>E2 Node Component | M | | 9.2.26 | E2 Node component | - | |
| | | Interface Type | | | | interface type | | |
| | | >>E2 Node Component ID | M | | 9.2.32 | E2 Node Component Identifier | - | |
| E2 Node TNL Association To Remove List | | | | 0..1 | | | YES | reject |
| >E2 Node TNL Association To Remove Item IEs | | | | 1..<max ofTNLA > | | | EACH | reject |
| | | >> Transport Layer Information | M | | 9.2.29 | Transport Layer Address of the E2 node. | - | - |
| | | >> Transport Layer Information Near-RT RIC | O | | 9.2.29 | Transport Layer Address of the Near-RT RIC. | - | - |

The 'E2 Node Component Configuration Addition List' IE may include a list of E2 node component configurations to be added. The list may include one or more E2 node component configuration items to be added.

The 'E2 Node Component Configuration Update List' IE may include a list of E2 node component configurations to be updated. The list may include one or more E2 node component configuration items to be updated.

The 'E2 Node Component Configuration Removal List' IE may include a list of E2 node component configurations to be removed. The list may include one or more E2 node component configuration items to be removed. The 'E2 Node TNL Association To Remove List' IE may include a list of TNL connections to be removed.

In the E2 node configuration update message, the E2 node component configuration items to be added or updated may include information on the E2 node component configuration. For example, Table 2 and Table 3 may be referred to for information on the E2 node component configuration. The 'Component Addition list' or 'Component Update list' of Table 3 may be referred to.

For example, the E2 node configuration update message may be configured as follows.

**Table 6**

| IE/Group Name | | | Presence | Range | IE type and reference | Semantics description | Criticality | Assigned Criticality |
|---|---|---|---|---|---|---|---|---|
| Message Type | | | M | | 9.2.3 | | YES | reject |
| Transaction ID | | | M | | 9.2.33 | . | YES | reject |
| E2 Node Component Configuration Addition Acknowledge List | | | | 0..1 | | | YES | reject |
| | >E2 Node Component Configuration Addition Acknowledge Item | | | 1.. <maxofE2node Components> | | | EACH | reject |
| | | >>E2 Node Component Interface Type | M | | 9.2.26 | E2 Node component interface type | - | |
| | | >>E2 Node Component ID | M | | 9.2.32 | E2 Node Component Identifier | - | |
| | | >>E2 Node Component Configuration Acknowledge | M | | 9.2.28 | Success or failure with Cause | - | |
| E2 Node Component Configuration Update Acknowledge List | | | | 0..1 | | | YES | reject |
| | >E2 Node Component Configuration Update Acknowledge Item | | | 1.. <maxofE2node Components> | | | EACH | reject |
| | | >>E2 Node Component Interface Type | M | | 9.2.26 | E2 Node component interface type | - | |
| | | >>E2 Node Component ID | O | | 9.2.32 | E2 Node Component Identifier | - | |
| | | >>E2 Node Component Configuration Update Acknowledge | M | | 9.2.28 | Success or failure with Cause | - | |
| E2 Node Component Configuration Removal Acknowledge List | | | | 0..1 | | | YES | reject |
| | >E2 Node Component Configuration Removal Acknowledge Item | | | 1.. <maxofE2node Components> | | | EACH | reject |
| | | >>E2 Node Component Interface Type | M | | 9.2.26 | E2 Node component interface type | - | |
| | | >>E2 Node Component ID | M | | 9.2.32 | E2 Node Component Identifier | - | |
| | | >>E2 Node Component Configuration Acknowledge | M | | 9.2.28 | Success or failure with Cause | - | |

The 'E2 Node Component Configuration Addition Acknowledge List' IE indicates a list of E2 node component configurations whose addition has been confirmed. For example, the Near-RT RIC 1010 may feedback at least one E2 node component configuration whose addition has been confirmed, among the E2 node component configurations requested to be added through the E2 node configuration update message of the E2 node 1020.

The "E2 Node Component Configuration Update Acknowledge List" IE indicates a list of E2 node component configurations whose update has been confirmed. For example, the Near-RT RIC 1010 may feedback at least one E2 node component configuration whose update has been confirmed, among the E2 node component configurations requested to be updated through the E2 node configuration update message of the E2 node 1020.

The E2 Node Component Configuration Removal Acknowledge List' IE indicates a list of E2 node component configurations whose removal has been confirmed. For example, the Near-RT RIC 1010 may feedback at least one E2 node component configuration whose removal has been confirmed, among the E2 node component configurations requested to be removed through the E2 node configuration update message of the E2 node 1020.

In the E2 standard, in the E2 setup procedure, the E2 node (e.g., O-DU) may deliver cell configuration information to Near-RT RIC on the E2 interface. The E2 node 1020 may deliver a message for each interface to the Near-RT RIC 1010 as it is through the 'E2 Node Component Configuration Addition List' IE of the E2 setup request message (e.g., E2 SETUP REQUEST in operation 1031). For example, as shown in Table 3, since the 'E2 Node Component Request Part' IE and the 'E2 Node Component Response Part' IE are defined, respectively, the E2 node 1020 may include both the request message and the response message (or confirmation message) in the E2 setup request message. The request message to be transmitted or received from the E2 node may be included in the 'E2 Node Component Request Part' IE. The response message to be transmitted or received from the E2 node may be included in the 'E2 Node Component Response Part' IE.

For example, the O-DU may include an F1 setup request message (e.g., F1 SETUP REQUEST in TS 38.473) in the 'E2 Node Component Request Part' IE. The O-DU may deliver the F1 setup request message to the Near-RT RIC 1010 through the 'E2 Node Component Request Part' IE. The O-DU may include the F1 configuration response message (e.g., F1 SETUP RESPONSE) in the 'E2 Node Component Response Part' IE. The O-DU may deliver the F1 configuration response message to the Near-RT RIC 1010 through the 'E2 Node Component Request Part' IE.

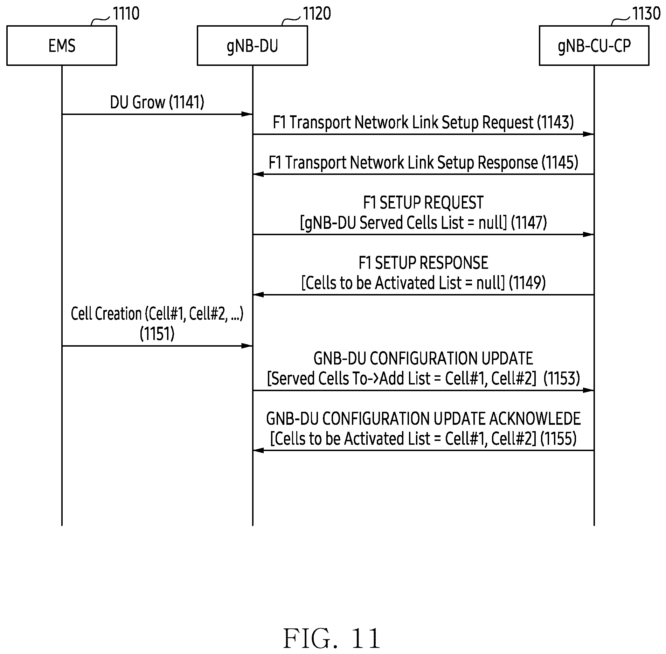

FIG. 11 illustrates an example of signaling between network entities for cell creation.

Referring to FIG. 11, an element management system (EMS) 1110 is a device that directly performs communication with a network element (NE) such as a base station and performs various functions including setup. The EMS 1110 may manage and control various network entities through the network. Hereinafter, an example of a cell expansion procedure through the EMS 1110 will be described.

In operation 1141, the EMS 1110 may transmit a DU grow message to a gNB-DU 1120. The DU grow message may indicate a target DU for the cell expansion.

In operation 1143, the gNB-DU 1120 may transmit an F1 transmission network link setup request message to a gNB-CU-CP 1130.

In operation 1145, the gNB-CU-CP 1130 may transmit an F1 transmission network link setup response message to the gNB-DU 1120.

In operation 1147, the gNB-DU 1120 may transmit an F1 setup request message (e.g., F1 SETUP REQUEST of TS 38.473) to the gNB-CU-CP 1130. The F1 setup request message may include information on one or more cells configured in the gNB-DU 1120. For example, the F1 setup request message may include a 'gNB-DU Served Cells List' IE. The gNB-DU Served Cells List' IE may include cell configuration information for each cell among one or more cells configured in the gNB-DU 1120. The cell configuration information may include cell information and system information (here, system information may be optionally included). The cell information may include cell global identity (CGI), physical cell identity (PCI), tracking area code (TAC), public land mobile network (PLMN), and frequency band information (e.g., frequency division duplex (FDD), time division duplex (TDD), and bandwidth). Meanwhile, in case that there is no cell configured in the gNB-DU 1120, the gNB-DU 1120 may include a 'gNB-DU Served Cells List' IE set to a null value in the F1 setup request message.

In operation 1149, the gNB-CU-CP 1130 may transmit an F1 setup response message (e.g., F1 SETUP RESPONSE of TS 38.473) to the gNB-DU 1120. The F1 setup response message may include information on one or more cells to be activated. For example, the gNB-CU-CP 1130 may include the 'Cells to be Activated List' IE in the F1 setup response message. The 'Cells to be Activated List' IE may include a cell list in which the gNB-CU requests activation from the gNB-DU. The gNB-DU 1120 may be configured to activate a cell included in the 'Cells to be Activated List' IE. For example, in case that there is no cell configured in the gNB-DU 1120, the gNB-CU-CP 1130 may include the 'Cells to be Activated List' IE set to a null value in the F1 setup response message.

In operation 1151, the EMS 1110 may transmit an instruction message for cell generation to the gNB-DU 1120. For example, the indication message may be configured to indicate generation for two cells (e.g., a first cell (Cell #1) and a second cell (Cell #2)). The gNB-DU 1120 may configure the first cell and the second cell.

In operation 1153, the gNB-DU 1120 may transmit a GNB-DU configuration update (e.g., GNB-DU CONFIGURATION UPDATE of TS 38.473) message to the gNB-CU-CP 1130. Unlike the F1 setup request procedure, the gNB-DU 1120 may have a configured cell. The GNB-DU configuration update message may include information on one or more cells configured in the gNB-DU 1120. For example, the GNB-DU configuration update message may include a 'Served Cells To Add List' IE. The 'Served Cells To Add List' IE may include cell configuration information for the first cell. The 'Served Cells To Add List' IE may include cell configuration information for the second cell. The cell configuration information may include cell information and system information (here, the system information may be selectively included). The cell information may include cell global identity (CGI), physical cell identity (PCI), tracking area code (TAC), public land mobile network (PLMN), and frequency band information (e.g., frequency division duplex (FDD), time division duplex (TDD), and bandwidth).

In operation 1155, the gNB-CU-CP 1130 may transmit a GNB-DU configuration update acknowledge (e.g., GNB-DU CONFIGURATION UPDATE ACKNOWLEDGE of TS 38.473) message to the gNB-DU 1120. The GNB-DU configuration update acknowledge message may include information on one or more cells to be activated. For example, the gNB-CU-CP 1130 may include a 'Cells to be Activated List' IE in the GNB-DU configuration update acknowledge message. The 'Cells to be Activated List' IE may include a cell list in which the gNB-CU requests activation from the gNB-DU. For example, the gNB-CU-CP 1130 may transmit the GNB-DU configuration update acknowledge message including information (e.g., cell global identity (CGI), physical cell identity (PCI), system information, public land mobile network (PLMN) list) on the first cell and information (e.g., CGI, PCI, system information, PLMN list) on the second cell to the gNB-DU 1120. The gNB-DU 1120 may be configured to activate a cell (e.g., a first cell, a second cell) included in the 'Cells to be Activated List' IE.

Referring to Table 3, in case of F1 I/F, in the E2 Node Component Configuration Addition List, the F1 setup request message (F1 SETUP REQEUST) and the F1 setup response message (F1 SETUP RESPONSE) are defined. As a E2 node 1020, the gNB-DU 1120 is exemplified. The gNB-DU 1120 may be referred to as an O-DU. The E2 setup procedure between the gNB-DU 1120 and the Near-RT RIC 1010 may be executed after completing the F1 setup procedure between the O-DU and the O-CU. The O-DU may transmit an E2 setup request message including the F1 setup request message (F1 SETUP REQEUST) and the F1 setup response message (F1 SETUP RESPONSE) to the Near-RT RIC 1010. After the E2 setup procedure, when change of the cell configuration information of the gNB-DU 1120 occurs, the gNB-DU 1120 may transmit the changed information to the Near-RT RIC 1010 through the cell configuration update procedure of the E2 node. For example, if the F1 setup procedure is additionally performed, the 'E2 Node Component Configuration Addition List' IE may be used. In addition, for example, if cell information is changed, the 'E2 Node Component Configuration Update List' IE may be used. In addition, for example, if the F1 interface is deleted, the 'E2 Node Component Configuration Removal list' IE may be used.

Substantially, during the F1 setup procedure between the O-DU and the O-CU, as shown in FIG. 11, a case in which the cell is in a null state occurs. For example, if the time gap between operation 1141 and operation 1151 is not sufficient, between the gNB-DU 1120 and the gNB-CU-CP 1130, in other words, between the O-DU and the O-CU, a gNB-DU configuration update procedure may be performed after the F1 setup procedure. This is because a cell is not configured in the gNB-DU while performing the F1 setup procedure.

Meanwhile, referring to Table 3, in case of the F1 I/F, only the F1 setup request message (F1 SETUP REQEUST) and the F1 setup response message (F1 SETUP RESPONSE) are defined in the E2 Node Component Configuration Addition List. As defined in Table 3, when implementing the O-DU, the O-DU must perform the E2 node configuration update procedure (e.g., operation 1135, operation 1137) after the gNB-DU 1120 completes the gNB-DU configuration update procedure (e.g., operation 1153, operation 1155). This is because in the examples defined in Tables 1 to 3, the E2 setup request message does not include the 'GNB-DU CONFIGRATION UPDATE' message or the 'GNB-DU CONFIGRATION UPDATE ACKNOWLEDGE' message. In Table 3, since only the 'Component Update list' includes the 'GNB-DU CONFIGURATION UPDATE' message or the 'GNB-DU CONFIGURATION UPDATE ACKNOWLEDGE' message, unnecessary signal message exchange between the gNB-DU 1120 and the Near-RT RIC 1010 may occur. As the number of gNB-DUs 1120 connected to the Near-RT RIC 1010 increases, the signaling overhead may increase.

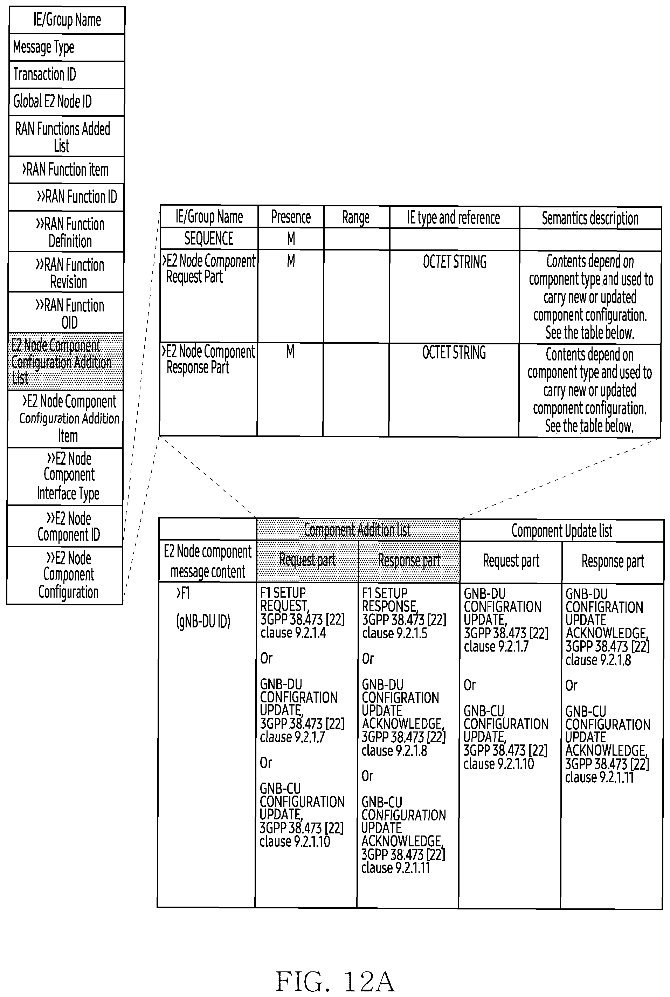

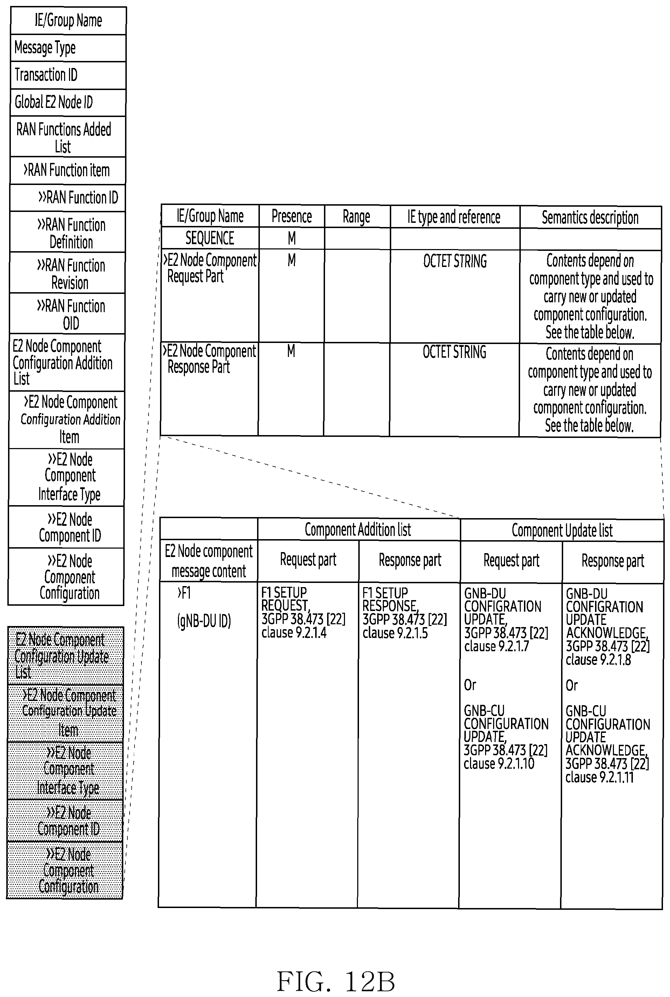

In order to solve the above-described problem, embodiments of the disclosure describe a technique for including the 'GNB-DU CONFIGRATION UPDATE' message or the 'GNB-DU CONFIGRATION UPDATE ACKNOWLEDGE' message in the E2 setup request message. For example, in the 'E2 Node Component Configuration' IE of the E2 Node Component Configuration Addition List' IE of the E2 setup request message, in addition to the 'F1 SETUP REQUEST' and the 'F1 SETUP RESPONSE', the 'GNB-DU CONFIGRATION UPDATE' or the 'GNB-DU CONFIGRATION UPDATE ACKNOWLEDGE' may be additionally defined. A specific message format is described through FIG. 12A. In addition, for example, the 'E2 Node Component Configuration Update List' IE may be additionally added in addition to the 'E2 Node Component Configuration Addition List' IE of the E2 setup request message. A specific message format is described through FIG. 12B.

FIGS. 12A and 12B illustrate examples of a message structure of an E2 setup request message. The E2 setup request message described in FIGS. 12A and 12B exemplifies the E2 setup request message of operation 1031 of FIG. 10. However, at least a part of the message format of the E2 setup request message may be changed from the messages defined in Tables 1 to 3. In order to describe embodiments to be described later, at least a part of the descriptions of Tables 1 to 3 may be referred to.

The E2 node 1020 may transmit the E2 setup request message (i.e., E2 SETUP REQUEST) to a Near-RT RIC 1010. The Near-RT RIC 1010 may transmit an E2 setup response message (i.e., E2 SETUP RESPONSE) or an E2 setup failure (i.e., E2 SETUP FAILURE) message to the E2 node 1020.

Referring to FIG. 12A, the E2 setup request message may be configured as shown in Table 1. 'E2 Node Component Configuration' in Table 1 may be configured as shown in Table 2. The 'E2 Node Component Request Part' IE or the 'E2 Node Component Response Part' IE of Table 2 may be configured to refer to the following table, not Table 3.

**Table 7**

| | Component Addition list | | Component Update list | |
|---|---|---|---|---|
| E2 Node component message content | Request part | Response part | Request part | Response part |
| gNB case | | | | |
| >F1 (gNB-DU ID) | F1 SETUP REQUEST, 3GPP 38.473 [22] clause 9.2.1.4 | F1 SETUP RESPONSE, 3GPP 38.473 [22] clause 9.2.1.5 | GNB-DU CONFIGRATION UPDATE, 3GPP 38.473 [22] clause 9.2.1.7 | GNB-DU CONFIGRATION UPDATE ACKNOWLEDGE, 3GPP 38.473 [22] clause 9.2.1.8 |
| | Or | Or | | |
| | | | Or | Or |
| | GNB-DU CONFIGRATION UPDATE, 3GPP 38.473 [22] clause 9.2.1.7 | GNB-DU CONFIGRATION UPDATE ACKNOWLEDGE, 3GPP 38.473 [22] clause 9.2.1.8 | | |
| | | | GNB-CU CONFIGURATION UPDATE, 3GPP 38.473 [22] clause 9.2.1.10 | GNB-CU CONFIGURATION UPDATE ACKNOWLEDGE, 3GPP 38.473 [22] clause 9.2.1.11 |
| | Or | Or | | |
| | GNB-CU CONFIGURATION UPDATE, 3GPP 38.473 [22] clause 9.2.1.10 | GNB-CU CONFIGURATION UPDATE ACKNOWLEDGE, 3GPP 38.473 [22] clause 9.2.1.11 | | |

Through the addition of the above-described components, the gNB-DU (e.g., gNB-DU 1120) may deliver the 'GNB-DU CONFIGRATION UPDATE' message and the 'GNB-DU CONFIGRATION UPDATE ACKNOWLEDGE' message to the Near-RT RIC 1010 through the E2 setup request message. In other words, by configuring the message portions that may be included in the additional list equally to cover the message portions that may be included in the update list, the E2 node 1020 may sufficiently deliver valid information to the Near-RT RIC 1010 through the E2 setup procedure before the E2 node configuration update procedure. The above-described gNB-DU scenario may also be applied to another E2 node. For example, the following table may be used, in order to describe message contents to be included in each of the 'E2 Node Component Request Part' IE and the 'E2 Node Component Response Part' IE of Table 2.

**Table 8**

| | Component Addition list | | Component Update list | |
|---|---|---|---|---|
| E2 Node component message content | Request part | Response part | Request part | Response part |
| gNB case | | | | |
| >NG | NG SETUP REQUEST, 3GPP 38.413 [19] clause 9.2.6.1 | NG SETUP RESPONSE, 3GPP 38.413 [19] clause 9.2.6.2 | RAN CONFIGURATION UPDATE, 3GPP 38.413 [19] clause 9.2.6.4 | RAN CONFIGURATION UPDATE ACKNOWLEDGE, 3GPP 38.413 [19] clause 9.2.6.5 |
| (AMF Name) | | | | |
| | Or | Or | | |
| | | | Or | Or |
| | AMF CONFIGURATION UPDATE, 3GPP 38.413 [19] clause 9.2.6.7 | AMF CONFIGURATION UPDATE ACKNOWLEDGE, 3GPP 38.413 [19] clause 9.2.6.8 | | |
| | | | AMF CONFIGURATION UPDATE, 3GPP 38.413 [19] clause 9.2.6.7 | AMF CONFIGURATION UPDATE ACKNOWLEDGE, 3GPP 38.413 [19] clause 9.2.6.8 |
| >Xn | XN SETUP REQUEST, 3GPP 38.423 [20] clause 9.1.3.1 | XN SETUP RESPONSE, 3GPP 38.423 [20] clause 9.1.3.2 | NG-RAN NODE CONFIGURATION UPDATE, 3GPP 38.423 [20] clause 9.1.3.4 | NG-RAN NODE CONFIGURATION UPDATE ACKNOWLEDGE, |
| (Neighbour Global NG- | | | | |
| RAN Node ID) | Or | Or | | 3GPP 38.423 [20] clause 9.1.3.5 |
| | NG-RAN NODE CONFIGURATION UPDATE, 3GPP 38.423 [20] clause 9.1.3.4 | NG-RAN NODE CONFIGURATION UPDATE ACKNOWLEDGE, 3GPP 38.423 [20] clause 9.1.3.5 | | |
| >E1 | GNB-CU-UP E1 SETUP REQUEST, 3GPP 38.463 [21] clause 9.2.1.4 | GNB-CU-UP E1 SETUP RESPONSE, 3GPP 38.463 [21] clause 9.2.1.5 | GNB-CU-UP CONFIGRATION UPDATE, 3GPP 38.463 [21] clause 9.2.1.10 | GNB-CU-UP CONFIGRATION UPDATE ACKNOWLEDGE, 3GPP 38.463 [21] clause 9.2.1.11 |
| (gNB-CU-UP ID) | | | | |
| | Or | | | |
| | GNB-CU-CP E1 SETUP REQUEST, 3GPP 38.463 [21] clause 9.2.1.7 | Or | Or | Or |
| | | GNB-CU-CP E1 SETUP RESPONSE, 3GPP 38.463 [21] clause 9.2.1.8 | GNB-CU-CP CONFIGURATION UPDATE, 3GPP 38.463 [21] clause 9.2.1.13 | GNB-CU-CP CONFIGURATION UPDATE ACKNOWLEDGE, 3GPP 38.463 [21] clause 9.2.1.14 |
| | Or | | | |
| | GNB-CU-UP CONFIGRATION UPDATE, 3GPP 38.463 [21] clause 9.2.1.10 | | | |
| | | Or | | |
| | | GNB-CU-UP CONFIGRATION UPDATE ACKNOWLEDGE, 3GPP 38.463 [21] clause 9.2.1.11 | | |
| | Or | | | |
| | GNB-CU-CP CONFIGURATION UPDATE, 3GPP 38.463 [21] clause 9.2.1.13 | | | |
| | | Or | | |
| | | GNB-CU-CP CONFIGURATION UPDATE ACKNOWLEDGE, 3GPP 38.463 [21] clause 9.2.1.14 | | |
| >F1 | F1 SETUP REQUEST, 3GPP 38.473 [22] clause 9.2.1.4 | F1 SETUP RESPONSE, 3GPP 38.473 [22] clause 9.2.1.5 | GNB-DU CONFIGRATION UPDATE, 3GPP 38.473 [22] clause 9.2.1.7 | GNB-DU CONFIGRATION UPDATE ACKNOWLEDGE, 3GPP 38.473 [22] |
| (gNB-DU ID) | | | | |
| | | Or | | clause 9.2.1.8 |
| | Or | | | |
| | | GNB-DU CONFIGRATION UPDATE ACKNOWLEDGE, 3GPP 38.473 [22] clause 9.2.1.8 | Or | Or |
| | GNB-DU CONFIGRATION UPDATE, 3GPP 38.473 [22] clause 9.2.1.7 | | | |
| | | | GNB-CU CONFIGURATION UPDATE, 3GPP 38.473 [22] clause 9.2.1.10 | GNB-CU CONFIGURATION UPDATE ACKNOWLEDGE, 3GPP 38.473 [22] clause 9.2.1.11 |
| | | Or | | |
| | Or | | | |
| | | GNB-CU CONFIGURATION UPDATE ACKNOWLEDGE, 3GPP 38.473 [22] clause 9.2.1.11 | | |
| | GNB-CU CONFIGURATION UPDATE, 3GPP 38.473 [22] clause 9.2.1.10 | | | |
| >X2 | EN-DC X2 SETUP REQUEST, | EN-DC X2 SETUP RESPONSE, | EN-DC CONFIGURATION | EN-DC CONFIGURATION |
| (Neighbour Global eNB ID) | 3GPP 36.423 [25] clause 9.1.2.31 | 3GPP 36.423 [25] clause 9.1.2.32 | UPDATE, 3GPP 36.423 [25] clause 9.1.2.34 | UPDATE ACKNOWLEDGE, 3GPP 36.423 [25] clause 9.1.2.35 |
| | Or | Or | | |
| | EN-DC CONFIGURATION UPDATE, 3GPP 36.423 [25] clause 9.1.2.34 | EN-DC CONFIGURATION UPDATE ACKNOWLEDGE, 3GPP 36.423 [25] clause 9.1.2.35 | | |
| eNB case | | | | |
| >NG | NG SETUP REQUEST, 3GPP 38.413 [19] clause 9.2.6.1 | NG SETUP RESPONSE, 3GPP 38.413 [19] clause 9.2.6.2 | RAN CONFIGURATION UPDATE, 3GPP 38.413 [19] clause 9.2.6.4 | RAN CONFIGURATION UPDATE ACKNOWLEDGE, 3GPP 38.413 [19] clause 9.2.6.5 |
| (AMF Name) | | | | |
| | Or | Or | | |
| | | | Or | |
| | RAN CONFIGURATION UPDATE, 3GPP 38.413 [19] clause 9.2.6.4 | RAN CONFIGURATION UPDATE ACKNOWLEDGE, 3GPP 38.413 [19] clause 9.2.6.5 | | Or |
| | | | AMF CONFIGURATION UPDATE, 3GPP 38.413 [19] clause 9.2.6.7 | AMF CONFIGURATION UPDATE ACKNOWLEDGE, 3GPP 38.413 [19] clause 9.2.6.8 |
| | | | | |
| | Or | | | |
| | | Or | | |
| | AMF CONFIGURATION UPDATE, 3GPP 38.413 [19] clause 9.2.6.7 | | | |
| | | AMF CONFIGURATION UPDATE ACKNOWLEDGE, 3GPP 38.413 [19] clause 9.2.6.8 | | |
| >Xn | XN SETUP REQUEST, 3GPP 38.423 [20] clause 9.1.3.1 | XN SETUP RESPONSE, 3GPP 38.423 [20] clause 9.1.3.2 | NG-RAN NODE CONFIGURATION UPDATE, 3GPP 38.423 [20] clause 9.1.3.4 | NG-RAN NODE CONFIGURATION UPDATE ACKNOWLEDGE, 3GPP 38.423 [20] |
| (Neighbour Global NG-RAN Node ID) | | | | |
| | Or | Or | | clause 9.1.3.5 |
| | NG-RAN NODE CONFIGURATION UPDATE, 3GPP 38.423 [20] clause 9.1.3.4 | NG-RAN NODE CONFIGURATION UPDATE ACKNOWLEDGE, 3GPP 38.423 [20] clause 9.1.3.5 | | |
| >W1 | W1 SETUP REQUEST, 3GPP 37.473 [23] clause 9.2.1.4 | W1 SETUP RESPONSE, 3GPP 37.473 [23] clause 9.2.1.5 | NG-ENB-DU CONFIGURATION UPDATE, 3GPP 37.473 [23] clause 9.2.1.7 | NG-ENB-DU CONFIGURATION UPDATE ACKNOWLEDGE, 3GPP 37.473 [23] clause 9.2.1.8 |
| (ng-eNB-DU ID) | | | | |
| | Or | Or | | |
| | | | Or | Or |
| | NG-ENB-DU CONFIGURATION UPDATE, 3GPP 37.473 [23] clause 9.2.1.7 | NG-ENB-DU CONFIGURATION UPDATE ACKNOWLEDGE, 3GPP 37.473 [23] clause 9.2.1.8 | | |
| | | | NG-ENB-CU CONFIGURATION UPDATE, 3GPP 37.473 [23] clause 9.2.1.10 | NG-ENB-CU CONFIGURATION UPDATE ACKNOWLEDGE, 3GPP 37.473 [23] clause 9.2.1.11 |
| | Or | Or | | |
| | NG-ENB-CU CONFIGURATION UPDATE, 3GPP 37.473 [23] clause 9.2.1.10 | NG-ENB-CU CONFIGURATION UPDATE ACKNOWLEDGE, 3GPP 37.473 [23] clause 9.2.1.11 | | |
| >S1 | S1 SETUP REQUEST, 3GPP 36.413 [24] clause 9.1.8.4 | S1 SETUP RESPONSE, 3GPP 36.413 [24] clause 9.1.8.5 | ENB CONFIGURATION UPDATE, 3GPP 36.413 [24] clause 9.1.8.7 | ENB CONFIGRATION UPDATE ACKNOWLEDGE, 3GPP 36.413 [24] clause 9.1.8.8 |
| (MME Name) | | | | |
| | | Or | | |
| | Or | | Or | |
| | | ENB | | Or |
| | ENB CONFIGURATION UPDATE, 3GPP 36.413 [24] clause 9.1.8.7 | CONFIGRATION UPDATE ACKNOWLEDGE, 3GPP 36.413 [24] clause 9.1.8.8 | MME CONFIGURATION UPDATE, 3GPP 36.413 [24] clause 9.1.8.10 | |
| | | | | MME CONFIGURATION UPDATE ACKNOWLEDGE, |
| | | | | 3GPP 36.413 [24] clause 9.1.8.11 |
| | Or | Or | | |
| | MME CONFIGURATION UPDATE, 3GPP 36.413 [24] clause 9.1.8.10 | MME CONFIGURATION UPDATE ACKNOWLEDGE, 3GPP 36.413 [24] clause 9.1.8.11 | | |
| >X2 (when neighbour is eNB) | X2 SETUP REQUEST, 3GPP 36.423 [25] clause 9.1.2.3 | X2 SETUP RESPONSE, 3GPP 36.423 [25] clause 9.1.2.4 | ENB CONFIGURATION UPDATE, 3GPP 36.423 [25] clause 9.1.2.8 | ENB CONFIGRATION UPDATE ACKNOWLEDGE, 3GPP 36.423 [25] clause 9.1.2.9 |
| (Neighbour Global eNB ID) | Or | Or | | |
| | ENB CONFIGURATION UPDATE, 3GPP 36.423 [25] clause 9.1.2.8 | ENB CONFIGRATION UPDATE ACKNOWLEDGE, 3GPP 36.423 [25] clause 9.1.2.9 | | |
| >X2 (when neighbour is en-gNB) | EN-DC X2 SETUP REQUEST, 3GPP 36.423 [25] clause 9.1.2.31 | EN-DC X2 SETUP RESPONSE, 3GPP 36.423 [25] clause 9.1.2.32 | EN-DC CONFIGURATION UPDATE, 3GPP 36.423 [25] clause 9.1.2.34 | EN-DC CONFIGURATION UPDATE ACKNOWLEDGE, 3GPP 36.423 [25] clause 9.1.2.35 |
| (Neighbour Global eNB ID) | Or | Or | | |
| | EN-DC CONFIGURATION UPDATE, 3GPP 36.423 [25] clause 9.1.2.34 | EN-DC CONFIGURATION UPDATE ACKNOWLEDGE, 3GPP 36.423 [25] clause 9.1.2.35 | | |

Referring to FIG. 12B, the E2 setup request message may be configured as shown in the following table.

**Table 9**

| IE/Group Name | | | Presence | Range | IE type and reference | Semantics description | Criticality | Assigned Criticality |
|---|---|---|---|---|---|---|---|---|
| Message Type | | | M | | 9.2.3 | | YES | reject |
| Transaction ID | | | M | | 9.2.33 | | YES | reject |
| Global E2 Node ID | | | M | | 9.2.6 | | YES | reject |
| RAN Functions Added List | | | | 1 | | List of RAN functions in E2 node | YES | reject |
| | >RAN Function item | | | 1.. <maxofRANfu nctionID> | | | | |
| | | »RAN Function ID | M | | 9.2.8 | Id of the declared Function | - | |
| | | »RAN Function Definition | M | | 9.2.23 | Definition of Function | - | |
| | | >>RAN Function Revision | M | | 9.2.24 | Revision counter | - | |
| | | »RAN Function OID | M | | 9.2.31 | Object identifier of corresponding E2SM | - | |
| E2 Node Component Configuration Addition List | | | | 0..1 | | List of E2 Node component configuration information | YES | reject |
| | >E2 Node Component Configuration Addition Item | | | 1.. <maxofE2node Components> | | | EACH | reject |
| | | >>E2 Node Component Interface Type | M | | 9.2.26 | E2 Node component interface type | - | |
| | | >>E2 Node Component ID | O | | 9.2.32 | E2 Node Component Identifier | - | |
| | | >>E2 Node Component Configuration | M | | 9.2.27 | Contents depends on component interface type | - | |
| E2 Node Component Configuration Update List | | | | 0..1 | | List of E2 Node component configuration information | YES | reject |
| | >E2 Node Component Configuration Update Item | | | 1.. <maxofE2node Components> | | | EACH | reject |
| | | >>E2 Node Component Interface Type | M | | 9.2.26 | E2 Node component interface type | - | |
| | | >>E2 Node Component ID | O | | 9.2.32 | E2 Node Component Identifier | - | |
| | | >>E2 Node Component Configuration | M | | 9.2.27 | Contents depends on component interface type | - | |

'M' indicates that IE is included as mandatory, and 'O' indicates that IE is included as optional. The E2 setup request message may include the 'E2 Node Component Configuration Update List' IE. The 'E2 Node Component Configuration Update List' IE may include a list of E2 node component configurations to be updated. The list may include one or more E2 node component configuration items to be updated. The E2 Node Component configuration item may include an E2 node component interface type (i.e., 'E2 Node Component Interface Type' IE), an E2 node component interface ID (i.e., 'E2 Node Component ID' IE), and an E2 node component configuration (i.e., 'E2 Node Component Configuration' IE). Tables 2 to 3 may be referred to for message content included in the E2 node component configuration.

As the 'E2 Node Component Configuration Update List' IE is added in the E2 setup request message, the E2 setup request message, as message contents of the E2 node component configuration, may include the 'GNB-DU CONFIGRATION UPDATE' message and the 'GNB-DU CONFIGRATION UPDATE ACKNOWLEDGE' message. The gNB-DU (e.g., the gNB-DU 1120) may deliver the 'GNB-DU CONFIGRATION UPDATE' message and the 'GNB-DU CONFIGRATION UPDATE ACKNOWLEDGE' message to the Near-RT RIC 1010 through the E2 setup request message.

In embodiments of the disclosure, a method for delivering message contents that was included in an E2 node configuration update message through the E2 setup request message has been described. The method described in FIGS. 12A and 12B is only an example, and the E2 setup request message including an update-related message (e.g., the 'GNB-DU CONFIGRATION UPDATE' message and the 'GNB-DU CONFIGRATION UPDATE ACKNOWLEDGE' message) may be understood as an embodiment of the disclosure.

In the above-described example, a situation in which 'GNB-DU CONFIGRATION UPDATE' message and 'GNB-DU CONFIGRATION UPDATE ACKNOWLEDGE' message by the gNB-DU are delivered through the E2 setup request message, or 'GNB-CU CONFIGRATION UPDATE' message and 'GNB-CU CONFIGRATION UPDATE ACKNOWLEDGE' message by the gNB-DU are delivered through the E2 setup request message has been described, but this example should not be interpreted to limit other embodiments of the disclosure. The gNB-CU may also deliver the 'GNB-DU CONFIGRATION UPDATE' message and the 'GNB-DU CONFIGRATION UPDATE ACKNOWLEDGE' message through the E2 setup request message, or may deliver the 'GNB-CU CONFIGURATION UPDATE' message and the 'GNB-CU CONFIGURATION UPDATE ACKNOWLEDGE' message through the E2 setup request message.

The apparatus and method according to embodiments of the disclosure enables radio access network (RAN) intelligent controller (RIC) to reduce overhead on the E2 interface by delivering the update message or the update acknowledge message of another interface (e.g., NG, XN, X2, E1, F1, W1, and S1) defined in the 3GPP standard to the Near-RT RIC through the E2 setup request message to the E2 node, in a wireless communication system. In addition, the time delay of reporting between the E2 interface and the Near-RT RIC may also be reduced.

The effects obtained in the disclosure are not limited to the above-mentioned effects, and other effects not mentioned will be clearly understood by those skilled in the art to which the disclosure belongs from the following description.

In embodiments, a method performed by an E2 node is provided. The method comprises transmitting, to a Near-real time (RT) radio access network (RAN) intelligent controller (RIC), an E2 setup request message. The method comprises receiving, from the Near-RT RIC, an E2 setup response message for the E2 setup request message. The E2 setup request message comprises E2 node component configuration information. A request part of the E2 node component configuration information comprises a next generation node base station (gNB)-central unit (CU) configuration update message or a gNB-distributed unit (DU) configuration update message, in case that the E2 node is a gNB-DU. A response part of the E2 node component configuration information comprises a gNB-CU configuration update acknowledge message corresponding to the gNB-CU configuration update message or a gNB-DU configuration update acknowledge message corresponding to the gNB-DU configuration update message, in case that the E2 node is the gNB-DU.

According to an embodiment, the E2 setup request message comprises a E2 node configuration addition list. The E2 node configuration addition list comprises an E2 node component configuration addition item. The E2 node component configuration addition item comprises an interface type and the E2 node component configuration information.

According to an embodiment, the E2 setup request message comprises a E2 node configuration update list. The E2 node configuration update list comprises an E2 node component configuration update item. The E2 node component configuration update item comprises an interface type and the E2 node component configuration information.

According to an embodiment, the E2 node comprises the gNB-DU. The E2 setup request message comprises an gNB-DU identifier (ID) of the gNB-DU.

According to an embodiment, the gNB-DU configuration update message comprises a list of one or more serving cells that are added or modified. The gNB-DU configuration update acknowledge message comprises a list one or more cells to be activated.

In embodiments, a method performed by a Near-real time (RT) radio access network (RAN) intelligent controller (RIC) is provided. The method comprises receiving, from an E2 node, an E2 setup request message. The method comprises transmitting, to the E2 node, an E2 setup response message for the E2 setup request message. The E2 setup request message comprises E2 node component configuration information. A request part of the E2 node component configuration information comprises a next generation node base station (gNB)-central unit (CU) configuration update message or a gNB-distributed unit (DU) configuration update message, in case that the E2 node is a gNB-DU. A response part of the E2 node component configuration information comprises a gNB-CU configuration update acknowledge message corresponding to the gNB-CU configuration update message or a gNB-DU configuration update acknowledge message corresponding to the gNB-DU configuration update message, in case that the E2 node is the gNB-DU.

According to an embodiment, the E2 setup request message comprises a E2 node configuration addition list. The E2 node configuration addition list comprises an E2 node component configuration addition item. The E2 node component configuration addition item comprises an interface type and the E2 node component configuration information.

According to an embodiment, The E2 setup request message comprises a E2 node configuration update list. The E2 node configuration update list comprises an E2 node component configuration update item. The E2 node component configuration update item comprises an interface type and the E2 node component configuration information.

According to an embodiment, the E2 node comprises the gNB-DU. The E2 setup request message comprises an gNB-DU identifier (ID) of the gNB-DU.

According to an embodiment, the gNB-DU configuration update message comprises a list of one or more serving cells that are added or modified. The gNB-DU configuration update acknowledge message comprises a list one or more cells to be activated.

In embodiments an apparatus of an E2 node is provided. The apparatus comprises a memory storing instructions, at least one transceiver; and at least one processor coupled to the at least one transceiver. The instructions, when executed by the at least one processor, cause the apparatus to transmit, to a Near-real time (RT) radio access network (RAN) intelligent controller (RIC), an E2 setup request message, and receive, from the Near-RT RIC, an E2 setup response message for the E2 setup request message. The E2 setup request message comprises E2 node component configuration information. A request part of the E2 node component configuration information comprises a next generation node base station (gNB)-central unit (CU) configuration update message or a gNB-distributed unit (DU) configuration update message, in case that the E2 node is a gNB-DU. A response part of the E2 node component configuration information comprises a gNB-CU configuration update acknowledge message corresponding to the gNB-CU configuration update message or a gNB-DU configuration update acknowledge message corresponding to the gNB-DU configuration update message, in case that the E2 node is the gNB-DU.

According to an embodiment, The E2 setup request message comprises a E2 node configuration addition list. The E2 node configuration addition list comprises an E2 node component configuration addition item. The E2 node component configuration addition item comprises an interface type and the E2 node component configuration information.

According to an embodiment, the E2 setup request message comprises a E2 node configuration update list. The E2 node configuration update list comprises an E2 node component configuration update item. The E2 node component configuration update item comprises an interface type and the E2 node component configuration information.

According to an embodiment, the E2 node comprises the gNB-DU. The E2 setup request message comprises an gNB-DU identifier (ID) of the gNB-DU.

According to an embodiment, the gNB-DU configuration update message comprises a list of one or more serving cells that are added or modified. The gNB-DU configuration update acknowledge message comprises a list one or more cells to be activated.

In embodiments, an apparatus of a Near-real time (RT) radio access network (RAN) intelligent controller (RIC) is provided. The apparatus comprises a memory storing instructions, at least one transceiver, and at least one processor coupled to the at least one transceiver. The instructions, when executed by the at least one processor, cause the apparatus to receive, from an E2 node, an E2 setup request message; and transmit, to the E2 node, an E2 setup response message for the E2 setup request message. The E2 setup request message comprises E2 node component configuration information. A request part of the E2 node component configuration information comprises a next generation node base station (gNB)-central unit (CU) configuration update message or a gNB-distributed unit (DU) configuration update message, in case that the E2 node is a gNB-DU. A response part of the E2 node component configuration information comprises a gNB-CU configuration update acknowledge message corresponding to the gNB-CU configuration update message or a gNB-DU configuration update acknowledge message corresponding to the gNB-DU configuration update message, in case that the E2 node is the gNB-DU.

According to an embodiment, the E2 setup request message comprises a E2 node configuration addition list. The E2 node configuration addition list comprises an E2 node component configuration addition item. The E2 node component configuration addition item comprises an interface type and the E2 node component configuration information.

According to an embodiment, The E2 setup request message comprises a E2 node configuration update list. The E2 node configuration update list comprises an E2 node component configuration update item. The E2 node component configuration update item comprises an interface type and the E2 node component configuration information.

According to an embodiment, the E2 node comprises the gNB-DU. The E2 setup request message comprises an gNB-DU identifier (ID) of the gNB-DU.

According to an embodiment, the gNB-DU configuration update message comprises a list of one or more serving cells that are added or modified. The gNB-DU configuration update acknowledge message comprises a list one or more cells to be activated.

Methods according to the embodiments described in the claims or the specification of the disclosure may be implemented in the form of hardware, software, or a combination of hardware and software.

When implemented as software, a computer-readable storage medium (e.g., non-transitory computer-readable storage medium) storing one or more program (software module) may be provided. The one or more program stored in the computer-readable storage medium is configured for execution by one or more processor in the electronic device. The one or more program include instructions that cause the electronic device to execute methods according to embodiments described in the claim or the specification of the disclosure.

Such program (software modules, software) may be stored in random access memory, non-volatile memory including flash memory, read only memory (ROM), electrically erasable programmable read only memory (EEPROM), magnetic disc storage device, compact disc-ROM (CD-ROM), digital versatile disc (DVD) or other form of optical storage, magnetic cassette. Alternatively, it may be stored in a memory configured with some or all combinations thereof. In addition, each configuration memory may be included a plurality.

In addition, the program may be stored in an attachable storage device that may be accessed through a communication network, such as the Internet, Intranet, local area network (LAN), wide area network (WAN), or storage area network (SAN), or a combination thereof. Such a storage device may be connected to a device performing an embodiment of the disclosure through an external port. In addition, a separate storage device on the communication network may access a device performing an embodiment of the disclosure.

In the above-described specific embodiments of the disclosure, the component included in the disclosure is expressed in singular or plural according to the presented specific embodiment. However, singular or plural expression is chosen appropriately for the situation presented for convenience of explanation, and the disclosure is not limited to singular or plural component, and even if the component is expressed in plural, it may be configured with singular, or even if it is expressed in singular, it may be configured with plural.

While the disclosure, has been shown and described with reference to various embodiments thereof, it will be understood by those skilled in the art that various changes in form and details may be made therein without departing from the scope of the disclosure as defined by the appended claims and their equivalents.

## Claims

1. A method performed by an E2 node, the method comprising:
transmitting, to a Near-real time (RT) radio access network (RAN) intelligent controller (RIC), an E2 setup request message; and
receiving, from the Near-RT RIC, an E2 setup response message for the E2 setup request message,
wherein the E2 setup request message comprises E2 node component configuration information,
wherein a request part of the E2 node component configuration information comprises a next generation node base station (gNB)-central unit (CU) configuration update message or a gNB-distributed unit (DU) configuration update message, in case that the E2 node is a gNB-DU, and
wherein a response part of the E2 node component configuration information comprises a gNB-CU configuration update acknowledge message corresponding to the gNB-CU configuration update message or a gNB-DU configuration update acknowledge message corresponding to the gNB-DU configuration update message, in case that the E2 node is the gNB-DU.

2. The method of claim 1,
wherein the E2 setup request message comprises a E2 node configuration addition list,
wherein the E2 node configuration addition list comprises an E2 node component configuration addition item, and
wherein the E2 node component configuration addition item comprises an interface type and the E2 node component configuration information.

3. The method of claim 1,
wherein the E2 setup request message comprises a E2 node configuration update list,
wherein the E2 node configuration update list comprises an E2 node component configuration update item, and
wherein the E2 node component configuration update item comprises an interface type and the E2 node component configuration information.

4. The method of claim 1,
wherein the E2 node comprises the gNB-DU, and
wherein the E2 setup request message comprises an gNB-DU identifier (ID) of the gNB-DU.

5. The method of claim 1,
wherein the gNB-DU configuration update message comprises a list of one or more serving cells that are added or modified, and
wherein the gNB-DU configuration update acknowledge message comprises a list one or more cells to be activated.

6. A method performed by a Near-real time (RT) radio access network (RAN) intelligent controller (RIC), the method comprising:
receiving, from an E2 node, an E2 setup request message; and
transmitting, to the E2 node, an E2 setup response message for the E2 setup request message,
wherein the E2 setup request message comprises E2 node component configuration information,
wherein a request part of the E2 node component configuration information comprises a next generation node base station (gNB)-central unit (CU) configuration update message or a gNB-distributed unit (DU) configuration update message, in case that the E2 node is a gNB-DU, and
wherein a response part of the E2 node component configuration information comprises a gNB-CU configuration update acknowledge message corresponding to the gNB-CU configuration update message or a gNB-DU configuration update acknowledge message corresponding to the gNB-DU configuration update message, in case that the E2 node is the gNB-DU.

7. The method of claim 6,
wherein the E2 setup request message comprises a E2 node configuration addition list,
wherein the E2 node configuration addition list comprises an E2 node component configuration addition item, and
wherein the E2 node component configuration addition item comprises an interface type and the E2 node component configuration information.

8. The method of claim 6,
wherein the E2 setup request message comprises a E2 node configuration update list,
wherein the E2 node configuration update list comprises an E2 node component configuration update item, and
wherein the E2 node component configuration update item comprises an interface type and the E2 node component configuration information.

9. The method of claim 6,
wherein the E2 node comprises the gNB-DU, and
wherein the E2 setup request message comprises an gNB-DU identifier (ID) of the gNB-DU.

10. The method of claim 6,
wherein the gNB-DU configuration update message comprises a list of one or more serving cells that are added or modified, and
wherein the gNB-DU configuration update acknowledge message comprises a list one or more cells to be activated.

11. An apparatus of an E2 node, the apparatus comprising:
a memory configured to store instructions;
at least one transceiver; and
at least one processor coupled to the at least one transceiver,
wherein the instructions, when executed by the at least one processor, cause the apparatus to:
transmit, to a Near-real time (RT) radio access network (RAN) intelligent controller (RIC), an E2 setup request message, and
receive, from the Near-RT RIC, an E2 setup response message for the E2 setup request message,
wherein the E2 setup request message comprises E2 node component configuration information,
wherein a request part of the E2 node component configuration information comprises a next generation node base station (gNB)-central unit (CU) configuration update message or a gNB-distributed unit (DU) configuration update message, in case that the E2 node is a gNB-DU, and
wherein a response part of the E2 node component configuration information comprises a gNB-CU configuration update acknowledge message corresponding to the gNB-CU configuration update message or a gNB-DU configuration update acknowledge message corresponding to the gNB-DU configuration update message, in case that the E2 node is the gNB-DU.

12. The apparatus of claim 11,
wherein the instructions, when executed by the at least one processor, cause the apparatus to perform one of methods of claims 2 to 5.

13. An apparatus of a Near-real time (RT) radio access network (RAN) intelligent controller (RIC), the apparatus comprising:
a memory configured to store instructions;
at least one transceiver; and
at least one processor coupled to the at least one transceiver,
wherein the instructions, when executed by the at least one processor, cause the apparatus to:
receive, from an E2 node, an E2 setup request message, and
transmit, to the E2 node, an E2 setup response message for the E2 setup request message,
wherein the E2 setup request message comprises E2 node component configuration information,
wherein a request part of the E2 node component configuration information comprises a next generation node base station (gNB)-central unit (CU) configuration update message or a gNB-distributed unit (DU) configuration update message, in case that the E2 node is a gNB-DU, and
wherein a response part of the E2 node component configuration information comprises a gNB-CU configuration update acknowledge message corresponding to the gNB-CU configuration update message or a gNB-DU configuration update acknowledge message corresponding to the gNB-DU configuration update message, in case that the E2 node is the gNB-DU.

14. The apparatus of claim 13,
wherein the instructions, when executed by the at least one processor, cause the apparatus to perform one of methods of claims 2 to 5.

15. A non-transitory computer-readable storage medium, comprising:
a memory configured to store instructions,
wherein the instructions, when executed by the at least one processor, cause an E2 node to perform one of methods of claims 1 to 5 or a Near-real time (RT) radio access network (RAN) intelligent controller (RIC) to perform one of methods of claims 6 to 10.
